# EUROPEAN PATENT SPECIFICATION

(11) **EP 3 103 271 B1**
(45) Date of publication and mention of the grant of the patent: **22.11.2017**
(21) Application number: 15704641.8
(22) Date of filing: 27.01.2015
(51) Int. Cl.: H04W 4/02

(54) **METHOD AND APPARATUS FOR PROVISIONING GEOFENCES**
VERFAHREN UND VORRICHTUNG ZUR BEREITSTELLUNG VON GEOFENCES
PROCÉDÉ ET APPAREIL PERMETTANT DE FOURNIR DES GÉOREPÈRES

(30) Priority: 05.02.2014 US 201414173626
(43) Date of publication of application: 14.12.2016
(73) Proprietor: Qualcomm Incorporated, San Diego, CA 92121-1714 (US)
(72) Inventor: DAS, Saumitra Mohan, San Diego, CA 92121-1714 (US); CHAO, Hui, San Diego, CA 92121-1714 (US); NAGUIB, Ayman Fawzy, San Diego, CA 92121-1714 (US)
(74) Representative: Klang, Alexander H.
(86) International application number: PCT/US2015/013093
(87) International publication number: WO 2015/119804

(56) References cited:
- EP-A1- 1 936 327
- US-A1- 2006 200 305
- US-A1- 2010 042 940
- US-A1- 2012 177 010

## Description

### BACKGROUND

Aspects of the disclosure relate to automated provisioning of geofences. A geofence is a closed boundary generally defined over a geographic area, such as an office, campus, retail space, etc. Once defined, a geofence allows mobile devices having position estimation capability to determine whether they are inside or outside the geofence. This determination can form the basis of many useful functions performed in conjunction with the mobile device.

For example, a geofence may be defined around the footprint of a coffee shop. A mobile device carried by a customer would then be able to determine, based on its location estimates, whether it is inside or outside the geofence. An app executing on the mobile device may display a menu of beverage choices, display relevant advertisements, report the arrival of the customer to a server associated with the coffee shop, and/or perform other tasks, all based on the determination that the customer has entered inside the geofence representing the coffee shop.

While geofences have many useful applications, the generation of geofences is typically a tedious, labor-intensive, and often difficult-to-scale process. Traditionally, geofences are manually drawn by app developers based on maps of the relevant geographic areas. For example, a developer of an app for the coffee shop may start with a geo-tagged map of the coffee shop and surrounding areas. Using the map, the app developer may then manually draw a boundary around the footprint of the coffee shop, to generate the geofence. This is generally a labor-intensive process that is difficult to scale.

Some software development kits (SDK) have been created that attempt to alleviate this problem by providing a library of tools that assist the software developer in manually drawing geofences. However, there remains a need for a method and apparatus for provisioning geofences that facilitate efficient and dynamic creation of geofences.

Software development kits provide visual programming features which enable developers to create geofences which can be used during the execution of mobile application software. Geofences have a wide variety of uses within mobile device application software. Currently, although geofences may be created through use of certain software development kits, creating a geofence involves manually inputting geofence preferences in a manner that is neither dynamic nor scalable.

Attention is drawn to the document US 2010/042940 (A1) which provides for a geofence system. The geofence system includes a display device and a graphical user interface displayable on the display device. The graphical user interface is configured to display a map corresponding with a geographical area, and provide a graphical representation of a geofence. The graphical representation is overlaid on the displayed map and includes a control portion responsive to an input device configured to adjust an operational aspect of at least a portion of the geofence. The control portion is associated with a location on the map.

Further attention id drawn to document US 2006/200305 (A1) which is directed to a mapping and navigational system. Specifically, the document is directed to a system for defining and assigning geographical boundaries to points of interests on a graphical map, where the geographical boundaries preferably correlate to spatially defined boundaries of the respective points of interests. In accordance with one example, the points of interest, along with the respective defined geographical boundaries, can be transferred from a personal computing device to a telecommunication device, such as a portable communication device, so as to be used for mapping purposes and to set off proximity alerts when the portable communication device, equipped with a GPS unit, enters or exits the geographical boundary of a particular point of interest.

### BRIEF SUMMARY

In accordance with the present invention methods for provisioning of geofences and apparatues configured to provision geofences are provided. Embodiments of the invention are claimed in the dependent claims.

Certain methods, apparatuses, and computer-program products are described which may be used to display a map comprising one or more geographic entities selectable by a user, and in response to a selection by the user, of at least one geographic entity of the one or more geographic entities, create at least one geofence corresponding to the selected at least one geographic entity. Additional steps or features are also disclosed, including displaying multiple geographic entities selectable by the user, and displaying a recommendation for the user to select a first one of the multiple geographic entities. Still other operations may include providing an interface that enables the user to select one or more geographic entities by inputting one or more keywords, receiving a keyword inputted by the user, and, in response to determining that a second geographic entity is associated with an attribute that matches the inputted keyword, creating a geofence corresponding to the second geographic entity. The methods, apparatuses and computer-program products may also involve receiving a first input provided by a user, the first input including one or more keywords, and in response to determining that a first geographic entity has attributes that match the one or more keywords, creating a geofence corresponding to the first geographic entity. Additional steps and processes disclosed herein include receiving a logical expression inputted by the user, the logical expression including multiple keywords and at least one logical operator, identifying additional geographic entities having attributes that match the multiple keywords in a manner that satisfies the logical expression, and in response to identifying the additional geographic entities, creating geofences corresponding to the additional geographic entities.

Also, certain methods, apparatuses, and computer-program products are described which may include a memory, and a processor coupled to the memory and configured to display a map comprising one or more geographic entities selectable by a user, and in response to a selection by the user, of at least one geographic entity, create at least one geofence corresponding to the selected at least one geographic entity.

The map may comprise multiple entities and the processor may be further configured to display a recommendation that the user select a first one of the multiple geographic entities, provide an interface feature that enables the user to select geographic entities by inputting one or more keywords, receive a keyword inputted by the user, and in response to determining that a second geographic entity is associated with an attribute that matches the inputted keyword, create a geofence corresponding to the second geographic entity.

### BRIEF DESCRIPTION OF THE DRAWINGS

Aspects of the disclosure are illustrated by way of example. In the accompanying figures, like reference numbers indicate similar elements, and:
FIG. 1 illustrates a simplified diagram of a system within which a software development kit (SDK) may operate.
FIG. illustrates a software development kit interface with certain features described herein.
FIG. 3. illustrates an example zone display map which may be presented as part of an SDK interface.
FIG. 4 is a zone information data library which may be used by an SDK, in accordance with the present disclosure.
FIG. 5 depicts an SDK interface having certain features which enable the creation of geofences.
FIG. 6 depicts an SDK interface having certain features which enable the creation of geofences.
FIG. 7 depicts an SDK interface having certain features which enable the creation of geofences.
FIG. 8 depicts an SDK interface having certain features which enable the creation of geofences.
FIG. 9 depicts an SDK interface having certain features which enable the creation of geofences.
FIG. 10 depicts an SDK interface having certain features which enable the creation of geofences.
FIG. 11 depicts an SDK interface having certain features which enable the creation of geofences.
FIG. 12 depicts an SDK interface having certain features which enable the creation of geofences.
FIG. 13 depicts an SDK interface having certain features which enable the creation of geofences.
FIG. 14 depicts an SDK interface having certain features which enable the creation of geofences.
FIG. 15 depicts an SDK interface having certain features which enable the creation of geofences.
FIG. 16 depicts a close view of an SDK interface zone map display, and several delineated zones.
FIG. 17 depicts a close view of an SDK interface zone map display, and several delineated zones depicted on the display.
FIG. 18 is a flow diagram depicting example operations in accordance with the present disclosure.
FIG. 19 is a flow diagram depicting example operations in accordance with the present disclosure.
FIG. 20 is a flow diagram depicting example operations in accordance with the present disclosure.
FIG. 21 is a flow diagram depicting example operations in accordance with the present disclosure.

### DETAILED DESCRIPTION

Several illustrative embodiments will now be described with respect to the accompanying drawings, which form a part hereof. While particular embodiments, in which one or more aspects of the disclosure may be implemented, are described below, other embodiments may be used and various modifications may be made without departing from the scope of the disclosure or the spirit of the appended claims. It should be understood that all details depicted in the drawings are provided for exemplary purposes only, and so that certain implementations of the methods described herein may be easily understood and practiced. As such, no such details or discussion of such details is to be interpreted for the purpose of limiting, defining or delineating the scope of this disclosure.

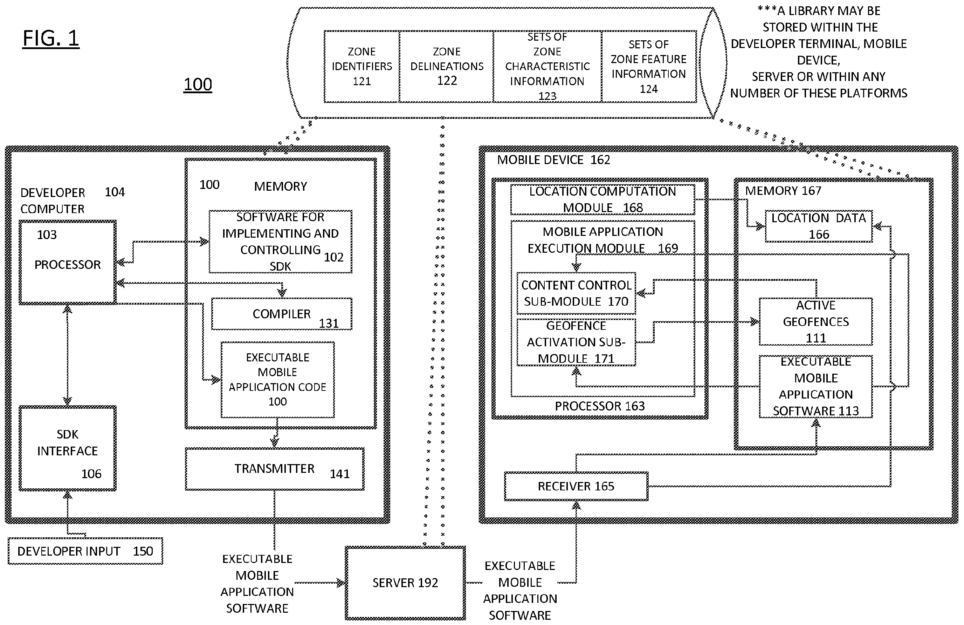

FIG. 1 illustrates a simplified diagram of a system 100 for enabling geofences to be customized, selected and activated. As depicted, the system 100 provides a software development kit (SDK) 101 for writing mobile application code to be executed by client mobile devices such as mobile device 162. This disclosure will describe several techniques, methods and operations which may be readily implemented within an SDK. However, an SDK is just one of several software platforms in which these techniques, methods and operations may be implemented. Any of these techniques, methods and operations may be implemented in other types of user or developer interfaces or software, whether at a mobile device, tablet, laptop, PC, or other such computing or communications apparatus. This disclosure shall be understood to cover each such implementation, in addition to implementations involving an SDK. However, for ease of explanation, several technical features described herein will be explained with regards to implementations that involve an SDK in some way. This choice of reference shall not be interpreted as affecting the scope of this disclosure in any way.

The SDK is implemented and controlled by SDK software 102, which may be loaded into the memory 105 of a computer terminal 104 used by a mobile application developer. The software 102 may include code which is executed by a processor 103 within the computer terminal 104, so that the SDK 101 may be installed and executed at the computer terminal 104. Hereinafter, where steps, processes, methods or computations are described as being performed or facilitated by SDK 101, such action may be understood as being performed by a processor (such as processor 103 or a collection of similarly configured processors) which is executing SDK implementation software 102. Such steps may also include other components which, amongst other things, may serve as sources of information utilized by the processor 103.

The computer terminal 104 may be any type of computing apparatus suitable for use by an application developer during the process of developing and encoding a mobile application. Computer terminal 104 may initially access the SDK implementation software 102 by downloading it from a remote server 192. Alternatively, the software 102 may be stored in an executable file in memory or some other type of storage device compatible with computer terminal 104, and readable by processor 103.

After SDK implementation software 102 installation, processor 103 executes SDK software 102 to activate and control the SDK 101 in accordance with developer inputs 150. Activating the SDK 101 involves displaying an SDK visual interface 106 at the user computing terminal 104. The interface 106 is such that a developer can interact with the SDK 101 by operating input features at the interface 106. The interface 106 provides display information, functionality and options which the developer can use to write mobile application software. The interface 106 also enables use of a compiler 131 with which the developer can compile written mobile application code so as to convert the code into an executable mobile application software format.

After a developer has generated mobile application software (shown at 113 after having been installed at a mobile device) using the SDK 101, the software 113 may be uploaded to a server 192. The server 192 stores the software 113, and receives software download requests from client mobile devices such as the device depicted at 162. When client mobile device 162 initiates a request for software download, server 192 downloads the software 113 to the requesting device.

As depicted, the application software 113 is received at the mobile device 162, using mobile device receiver 165. After being received, the application software 113 is installed in memory 167 at the mobile device 162. The software 113 may subsequently be executed by mobile device processor 163. Executing the software may involve opening a mobile application execution module 169, which is run within processor 163. The mobile application sub-module may include a content control sub-module 170 and a geofence activation sub-module 171.

With regards to the SDK 101 operable at computing device 104, the SDK interface 106 may provide visual programming input features which a developer may use to write mobile application software 113. The interface 160 also provides visual programming features which enable a developer, when writing mobile application code, to easily create geofence code modules within the mobile application software 113. Through the incorporation of geofence code modules into application software 113, the software, upon being executed at mobile device 162, may cause the device processor 163 to activate geofences in accordance with geofence module specifications encoded by the developer. The software may also cause the processor to maintain a list of active geofences 111, and update the list each time the processor activates a geofence.

As will be described in greater detail later on, geofences are geographic references used in conjunction with the execution of mobile application software 113 by a client mobile device processor 163. Each geofence is based on a collection of absolute or relative geodetic or spatial information (commonly, but not necessarily, latitude and longitude information) understood to delineate a geographic area (also referred to hereinafter as a "zone", "point of interest", or as an "entity") or geographic area boundaries, as well as on encoded instructions for using the information. When a geofence is based on information which delineates a zone, the geofence is said to be defined or created with respect to that delineated zone. Each such collection of information which delineates a geographic area will be referred to hereinafter as zone delineation information. Multiple sets of zone delineation information 122 may be used by SDK 101 so as to enable a developer to create geofences with respect to any zone delineated by one of the sets.

Subsequent figures will detail how, in accordance with this disclosure, the SDK 101 may be designed to enable a developer to create geofences within mobile application software 113. 111 this regard, the SDK 101 includes features which enable a developer to easily incorporate zone delineation information 122 into geofence modules within software 113, and to provide code for controlling how the information will be used upon software 113 execution. Hereinafter, for reasons which will be explained later, the process by which a developer creates a geofence may be referred to interchangeably, as "selecting" or "choosing" a geofence. In selecting a geofence, code is written so that when mobile application software 113 is executed at a mobile device 162, the zone delineation information 122 is involved in calculations or processing decisions which are used as a basis for controlling mobile device activity, operations or performance. A geofence should be understood to be activated at such time that a set of zone delineation information is first used in such calculations at a mobile device.

Certain visual programming tools and features provided at the interface 106 enable a developer to easily write geofence code modules by searching, retrieving and referencing data or sets of data stored in a map zone data library 120 (hereinafter "data library"). The map zone data library 120 may be stored in memory 105 at the computing device 104 or at a server 192 with which computing device 104 communicates while the SDK 101 is being executed. Additionally or alternatively, a map zone data library 120 may be stored at any number of client mobile devices, such as the mobile device depicted at 162.

When data library 120 is stored exclusively at client mobile devices, the operations or the SDK 101 may be slightly different, in certain regards, than when the data library is stored at server 162 or computer terminal 104. Thus, this disclosure will first describe SDK 101 features which may be provided to a developer when a data library is stored at the developer terminal 104, or at a server 192 with which the developer terminal communicates. Later, this disclosure will describe certain unique SDK 101 features associated with those implementations in which data library 120 is stored exclusively at one or more client mobile devices 162.

The data library 120 may serve a variety of purposes. For instance, the data library 120 may store information about the location, dimensions, characteristics and features of several delineated geographic zones. This information can be made available to the developer as a prepackaged SDK 101 feature, and can be accessible through the SDK visual interface 106. Various SDK interface 106 features, each of which will be discussed with reference to later figures, enable the developer to search, retrieve, and review the information in data library 120. Other features enable a developer to create geofences by quickly selecting information, from data library 120, which the developer wishes to incorporate into geofence code modules. Still other features enable a developer to create geofences by intelligently writing geofence code module references to information in data library 120, without actually seeing or reviewing any of this information.

The SDK 101 of this disclosure may be designed to facilitate writing application software which incorporates geofences in any number of ways. For example, a developer may intend for application software to control the display of interactive content such that content is provided only when client mobile devices (such as device 162) are in or near specific areas or zones. The developer may achieve this result by creating a geofence module within the software 113, so as to implement a geofence with respect to the relevant areas or zones.

As another example of the flexibility of the SDK 101 herein disclosed, the SDK 101 may also be designed to enable the developer to write application software 113 which incorporates a geofence module for the purpose of controlling data gathering or reporting activities effectuated by the software. In this case, the application software 113 is written to cause a mobile device 162 to report information to a server, other mobile device, email account, or the like, in response to a mobile device location condition being satisfied. Moreover, the location condition can be defined with respect to a geofence created using the geofence module. Thus, for example, the mobile application software 113 can be written so that the reporting of information will be triggered by the device 162 being brought within, or being removed from, any geographic area with respect to which the developer creates a geofences.

As mentioned previously, the SDK implementation software 102 may be designed or written so that the SDK visual interface 106 displays interactive features operable by a developer. The software 102 can be further designed or written so that developers can write geofence modules into application software 113 through manipulation of the interactive features.

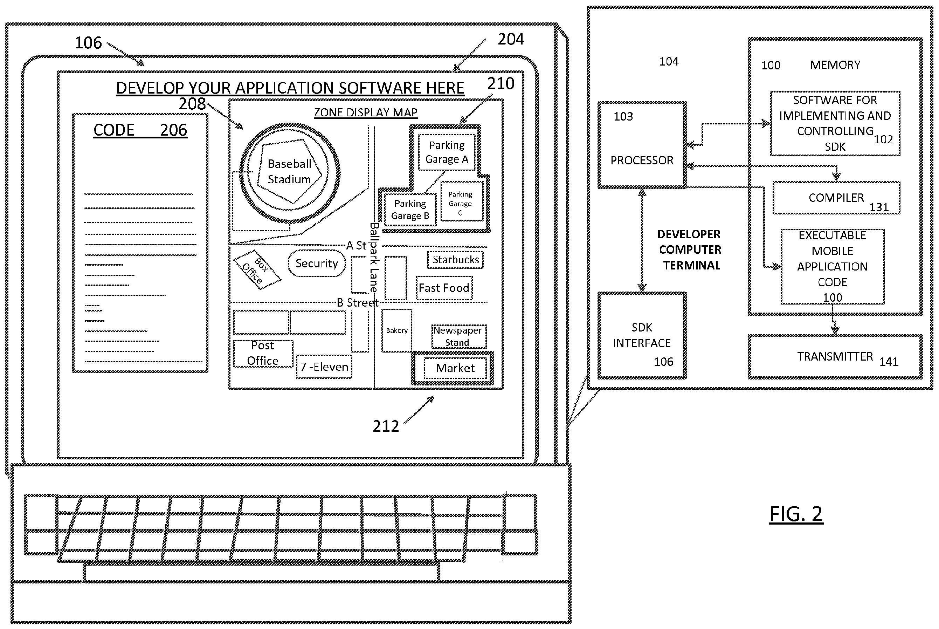

FIG. 2 depicts an example SDK interface 106 being operated at developer computer terminal 104. FIG. 2 also displays several of the interactive features which a developer may use to write application software 113 and create geofence modules within the software. The SDK interface 106 may include several other features, which, for reasons of simplicity, are not depicted in FIG. 2. Rather, these features will be depicted in subsequent FIGs. and explained by reference thereto.

One such interactive feature depicted in FIG. 2 is a geographic zone display map (hereinafter "zone display map", or "display map"), which is shown at 204. The zone display map 204 may include interactive features which enable a developer to control or alter the display of the map. For example, the display map 204 may include a button (not shown) for altering the scope of the map. Through activation of the button, a developer using the SDK interface 106 can narrow or widen the display scope, which may result in corresponding increases or decreases in map detail granularity.

As described previously, data library 120 is used to store multiple sets (or "instances") of zone delineation information 122, each of which delineates a different predefined zone. Any of the predefined zones may be evaluated by the developer, for the purpose of choosing zones with respect to which geofences will be created. The zone display map 204 may display the location and layout of any zone delineated in data library 120. In FIG. 2, for example, the zone display map 204 depicts one such zone at 208, as indicated by the thick black line around the baseball stadium. The zone display map also displays zones at 210 and 212. Zone 210 is delineated with respect to a parking garage complex, while zone 212 is delineated with respect to a market.

The zone delineation information underlying any such zones or combination of zones may be selected by the developer for use in creating a geofence module. Hereinafter, when a developer selects or indicates zone delineation information for the purpose of creating a geofence, the selection input will sometimes be referred to as "selecting a zone". In later paragraphs, this disclosure will describe several different SDK interface 106 zone selection features, each of which provides a unique mechanism with which a developer can select zones when creating geofences.

As described previously, when a zone is selected, the corresponding zone delineation information is included in code being written. An example of code being written is shown at 206.

As evidenced by the zones depicted at 208, 210 and 212, the zones delineated in the data library 120 are intuitively shaped based on map data and depictions, as well as geographic, land use and urban planning information. That is, each zone is delineated by boundaries which relate, with some degree of precision, to the recognizable usage or characteristics of the land underlying the zone. For example, where a zone is delineated with respect to a distinguishable section of a city which hosts a cluster of restaurants, government office buildings, commercial establishments, medical facilities, tourist attractions, or is characterized by some other distinguishing feature or combination of features, the zone may be delineated in such a way that the delineation approximately follows recognizable outer edges of the distinguishable area. In addition to neighborhoods, areas, and other large scale uses of land, zones may be delineated with respect to smaller locales or points of interest, such as portions of land underlying individual shops, parks, museums, stores, tourist attractions, schools, houses, office buildings or other recognizable land use capable of being identified and located with some degree of precision.

Additionally, or alternatively, any number of zones may be delineated with respect to territories, governmental or jurisdictional areas, neighborhoods, or any other conceivable area recognized as being associated with geographic boundaries or delineations, no matter how abstract. Data library 120 may be used to store zone delineation information 122 with respect to zones defined in any of these ways.

As mentioned previously, each zone delineated in data library 120 may be defined so as to approximately conform to recognizable boundaries of the respective underlying area. Thus, as a hypothetical example, if, in data library 120, a zone were delineated with respect to an amusement park which occupies a star-shaped land area, the delineation could be star-shaped, and could involve boundaries nearly equivalent to the actual geographic boundaries of the park. Thus, certain zones may be asymmetrically or oddly shaped, and delineated zone boundaries need not form a straight line or circular edge, even though any boundary may be so delineated when an underlying geographic area has a straight or circular perimeter.

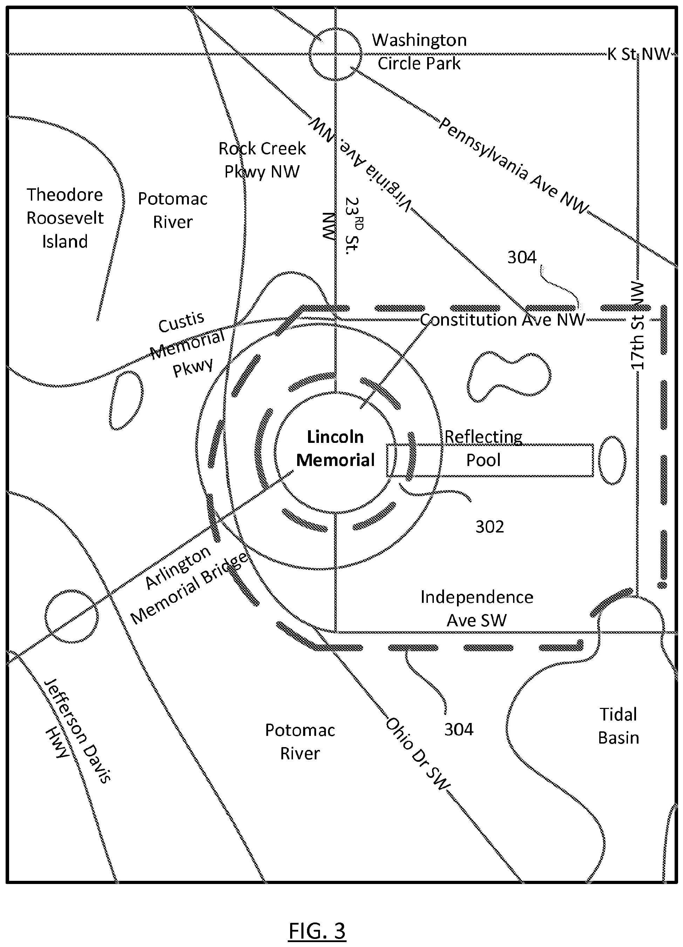

FIG. 3 is a focused view of zone display map 204 sometime after a developer has manipulated SDK interface 106 features so as to pan the map to a view of the Western side of the National Mall in Washington, D.C. FIG. 3 is intended to provide an additional illustration of the manner in which zones may be delineated in data library 120 and how the zone display map enables a developer to review these delineations.

As depicted at 302, zone display map 204 depicts the delineation of a zone defined so as to encircle the Lincoln Memorial. Also, the zone display map 204 depicts the delineation of a zone 304 defined with respect to the entire Western half of the National Mall. As may be understood through reference to zone depictions 302 and 304, the data library 120 may store zone delineation information 122 with respect to zones which overlap each other. Additionally, or alternatively, the data library 120 may store zone delineation data 122 with respect to zones which subsume smaller zones also delineated in the library.

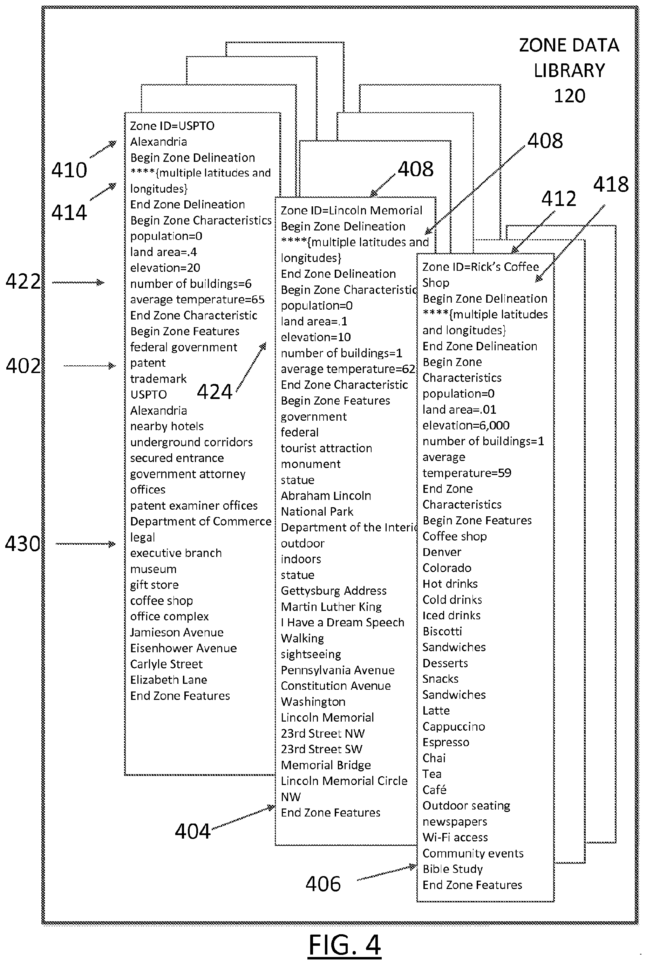

As implied at 121, the data library 120 may incorporate unique zone identifiers which enable a developer to reference the zone information related to any particular zone delineated in data library 120. Zone identifiers may be arbitrarily assigned codes. Alternatively, zone identifiers may be intuitively chosen names selected in order to facilitate developer zone recognition. The use of zone identifiers will be explained further, by reference to FIG. 4.

FIG. 4 depicts example information in data library 120, as well as one example methodology for organizing the data therein. FIG. 4 is depicted for explanatory purposes only. Moreover, FIG. 4 depicts only one of the many techniques which may be used to implement certain aspects of the present disclosure, and should not be interpreted for the purposes of defining or limiting the scope of this disclosure in any way.

As depicted in FIG. 4, data library 120 may be used to store information with respect to each of several zones. As indicated by the arrows at 404, 402, and 406, these zones include zones defined with respect to the Lincoln Memorial in Washington, D.C., the United States Patent and Trademark Campus in Alexandria, VA, and a coffee shop in Denver Colorado, respectively. The examples of ordered information presented at 402, 404 and 406 may be interpreted as representing how the information may be stored or organized using linked lists, arrays, ordered text files, stacks, queues or any other data structures. As depicted at 408, the zone information stored with respect to the Lincoln Memorial is referenced, in the data library 120, by the zone identifier "Lincoln Memorial". As depicted at 410 and 412, the zone information stored with respect to the USPTO campus and the coffee shop is referenced by the zone identifier "USPTO Alexandria", and "Ricks Coffee Shop", respectively.

As depicted at 414, 416, 418, on the lines immediately following each zone identifier, data library 120 stores the respective zone delineation information for the zone referenced by the preceding identifier. In this way, each set of zone delineation information is indexed to a respective zone identifier. Thus, by reference to zone identifier 408, 410, 412, the respective zone delineation information 414, 416, 420 can be easily queried or retrieved.

In addition to storing delineation information with respect to various zones, the data library 120 may be used to store information about the characteristics, features, or attributes of any or all of the delineated zones, as well as information about any activities which occur within any zone, or the manner in which the land underlying any zone is used. For example, when library 120 stores delineation information 122 with respect to a zone, the stored delineation information 122 may be linked or indexed to information depicting facts, characteristics or attributes such as a number of people living in the zone, the land area of the zone, a highest point of the zone, an average zone temperature or rainfall, any area codes or zip codes used within the zone, the city, county, state or country within which the zone is located, or any other similar and ascertainable information related to the zone.

Hereinafter, such information which depicts zone facts, characteristics or attributes will be referred to as "zone characteristic information". The storage of zone characteristic information is depicted at 123 in FIG. 1. As will be explained in greater detail with reference to later drawings, the storage of zone characteristic information 123 with respect to each delineated zone is an SDK 101 feature which enables developers to quickly search for, retrieve, review - and, at the developers's discretion - select zone delineation information on the basis of zone characteristics.

For any zone delineated in data library 120, zone characteristic information 123 may be stored, accessed and referenced using a set of variables with assigned strings, numbers, boolean values or other data types. As a simple example, any set of zone characteristic information 123 may include integer variables with names such as "population", "area" or "average zone precipitation". Integer values may be assigned to these variables so as to represent zone population, land area (square footage, square mileage, or the like), or average zone precipitation. Alternatively, the zone characteristic information 123 may be stored as a set of data in a standardized formal For example, sets of zone characteristic information 123 may be stored in text files or other data files, with each instance of data occupying a separate line of the file, according to a predetermined ordering of information.

Example sets of zone characteristic information are depicted at 422 and 424 in FIG. 4. In the example data library 120 of FIG. 4, each set of zone characteristic information 422, 424 includes a set of zone characteristic variables used to depict zone land area, population, elevation, number of buildings in the zone, and average temperature.

In one embodiment (not depicted in FIG. 4) of data library 120, the data library stores zone characteristic information which depicts the sources of information available to mobile devices in the various zones delineated in the data library. This specific form of zone characteristic information will be discussed later, at which point it will be referred to as "zone location fixing information".

Data library 120 may also be used to store information about activities, uses, governance, ownership, administration, or organization associated with any zone delineated in the data library, as well as information about any other zone features. Such information will be referred to hereinafter as "zone feature information". The storage of zone feature information is depicted in FIG. 1, at 124. For any or all zones delineated in library 120, a set of zone feature information may be stored at 124. Within these sets, instances of zone feature information may be stored in the form of zone feature words. Zone feature words are individual words, names, phrases or combinations of words, names or phrases which are descriptive of, bear some intuitive relationship to a feature of a respective zone. Thus, when data library 120 stores zone delineation information with respect to the location of a large name-brand clothing store, any or all words such as "clothing", "clothing store", "merchandise", "name-brand clotting", "shirts", "pants", "menswear" or "winter clothing", "winter sale" or "gift cards available" might be appropriately stored in the respective set of zone feature information.

As will be explained in greater detail with reference to later drawings, the storage of zone feature information with respect to delineated zones is also used within the SDK 101 for providing developers with tools for quickly searching for, retrieving, reviewing - and, at the developer's discretion - selecting zone delineation information on the basis of zone features.

In FIG. 4, one set of zone feature information is depicted at 430. As depicted, for each zone delineated in data library 120, the zone identifier, zone delineation information, set of zone characteristic information and the set of zone feature information occupy neighboring storage space. In this way, with regards to each individual zone delineated in data library 120, all respective zone information is mutually indexed and can easily be referenced, queried, analyzed and retrieved. Hereinafter, when one type of information related to a zone (e.g. the zone identifier, set of zone characteristic information, etc.) is linked or indexed to another type of information in data library 120, each type of information will be referred to as being "associated with" or "corresponding to" the other type of information. Thus, in referring to any particular zone delineated in library 120, this disclosure may refer to a corresponding set of zone delineation information, a corresponding set of zone characteristic information data or zone feature information, and may refer to either or both of these sets as corresponding to the delineated zone, as well as the zone identifier.

With respect to this entire disclosure, it shall be understood that any discussion of zone feature information and zone characteristic information shall not be interpreted to imply any rigid or formal definition with regards to these two types of data. In fact, information about any zone may be stored both as zone feature information and zone characteristic information. For example, the fact that 5,000 inhabitants live in a certain zone could be represented within data library 120 by a feature word such as "lots of residents" or "densely populated", while also being represented within a set of zone characteristic information by a variable called "population" which is assigned the value 5000.

This disclosure differentiates between the two types of information only for clarity, and because certain information (referred to herein as "zone feature information") is most easily or intuitively depicted or understood when feature words are used as the communicative mechanism, while other information (zone characteristic information) is easily or appropriately depicted using variable names, quantities, numerical ranges, and other more mathematical abstractions. As described herein, certain processes involving variables may be distinguishable from processes involving feature words, and the terms "zone feature information" and "zone characteristic information are used in recognition of this fact.

In one implementation of certain of the techniques presented wherein, the data library 120 may be stored on a server which is remote from user terminal 104. When the SDK implementation software 102 is executed, the software 102 may facilitate a download of information from the external server data library 120, to the computer terminal 104. During this download, any or all of the information in data library 120 may be provided to user terminal 104, and subsequently stored in memory at user terminal 104. Thus, after the download has taken place, a copy of data library 120 can be accessed at user terminal 104.

As described previously, the SDK interface 106 zone display map 204 is designed so as to provide a visual depiction of any of the various zones in data library 120. The zones may be depicted as overlays presented in conjunction with the zone display map 204 shown at the interface 106. In this way, the SDK visual interface 106 enables an application developer to see a cartographic depiction of the delineated zones, including the zone positions, space occupied by the zone, and relative position with respect to geographic or manmade features shown on the map. When a map overlay presentation feature is used to depict zones, additional zone display map 204 manipulation features enable a developer to control which zones are depicted on the map 204.

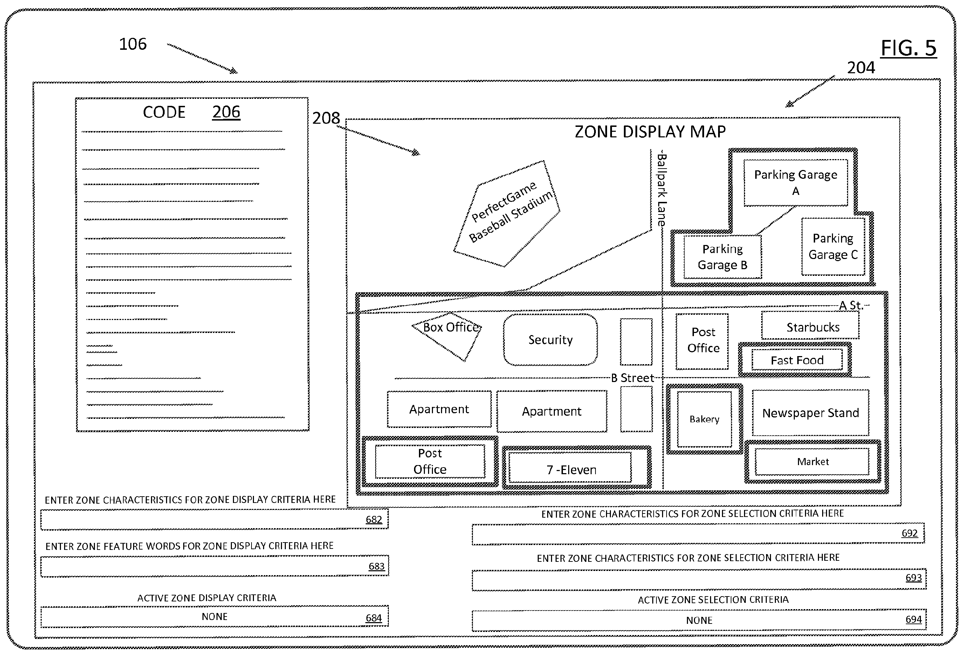

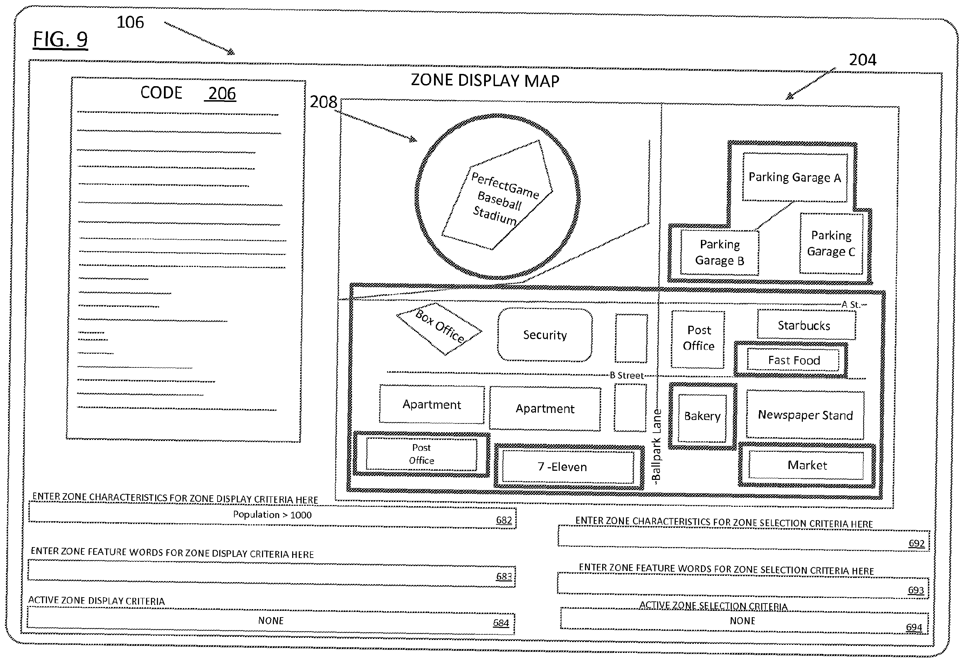

FIGs. 5-15 depict an example SDK interface 106, including a zone display map 204 and certain example zone display map control features 682, 683 during various phases of use by a developer. The SDK 101 may be designed to declutter the zone display map 204 in accordance with zone display criteria customized by the developer. Moreover, the SDK 101 and SDK interface 106 may enable the developer to specify zone display criteria based on zone characteristic information 123, zone feature information 124, or both such types of information. For example, when data library 120 stores population data with respect to delineated zones, the SDK interface 106 may be designed to accept a developer input specifying a minimum or maximum number of zone residents as a criteria for the display of zones at the zone display map 204.

A zone display criteria may be inputted by a developer by typing text, which may include logical symbols. As depicted in each of FIGs. 5-15, the SDK interface 106 may be designed to provide a zone display criteria input window 682 which the developer may use to provide zone display criteria inputs. Also FIGs 5-15 depict active zone display criteria window 684. Window 684 is used to display the most recent zone display criteria inputted by the developer, for so long as that input controls the display of zones at zone display map 204. As depicted at 684, no zone display criteria has been inputted by the developer. For this reason, zone display map 204 shows all the zones that are defined in data library 120 and which are located within the depicted urban area.

Although not depicted, the SDK interface 106 may include a zone recommendation feature. The zone recommendation feature may recommend or distinguish certain zones shown on the zone display map 204 based on a recommendation or popularity criteria. For example, zones which are largest, most frequently visited, or most commonly referenced during early use of the SDK interface 106 may be highlighted or displayed in some manner that differentiates these zones from other zones that do not satisfy the criteria.

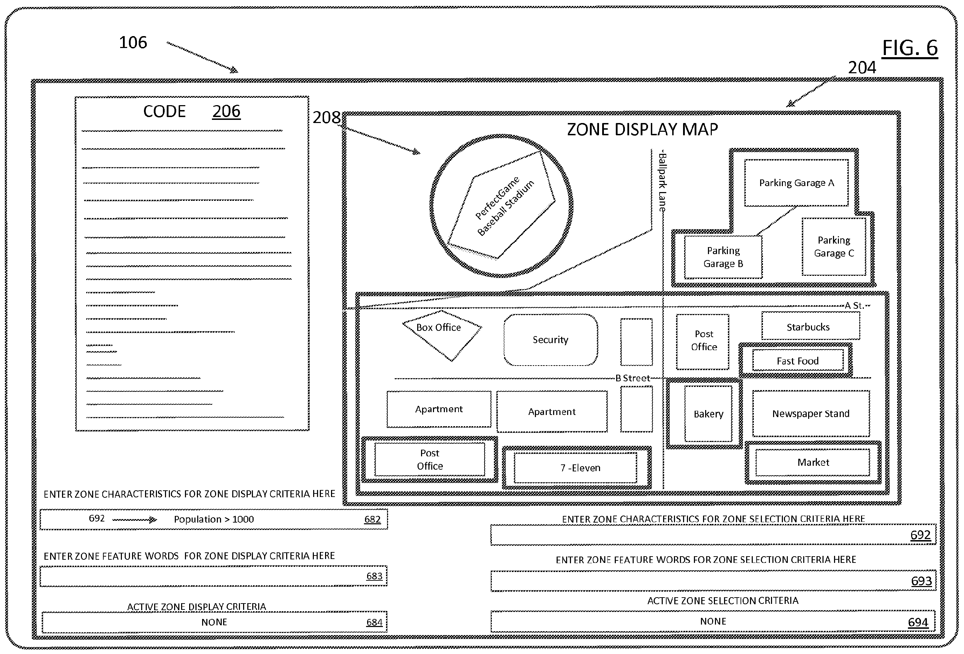

FIG. 6 depicts how a zone display criteria based on zone characteristic information may be formatted and inputted by a developer at input window 682. As FIG. 6 depicts, a developer has formatted a zone display criteria 692 at input window 682. The developer has based the criteria on zone characteristic information, and has defined the criteria with respect to zone population.

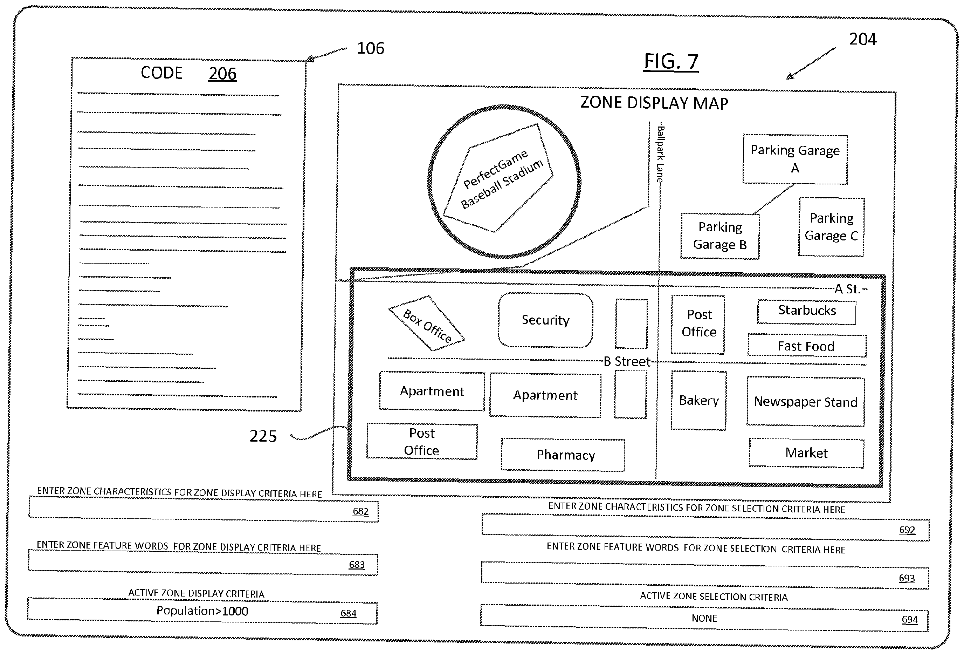

Moreover, FIG. 7 depicts an example of how such a population criteria, once inputted, may be used by the SDK 101 to control the zones displayed at zone display map 204. As can be seen at 684, the zone display criteria inputted at 682 is now active, and has been used to limit the zones displayed at the zone display map 204. As a result, only zone 225 is displayed on the zone display map 204. Zone 225 is defined with respect to small urban area which includes apartments and neighboring businesses and establishments which are likely to be used by the apartment residents. Zones previously depicted around the baseball stadium, bakery and market, post office, parking garage and pharmacy are no longer depicted. These zones are no longer depicted because, within data library 120, none of these zones corresponds to a set of zone characteristic information 123 indicating a zone population in excess of 1000 inhabitants.

The SDK interface 106 may be designed to process inputted display criteria defined with respect to any combination of the zone characteristic information 123 stored within the sets of zone characteristic information in data library 120. In this regard, the SDK 101 visual interface can be designed to facilitate the use of criteria combinations created using logical operators. A logical operator feature could be used by a developer to input complex zone display criteria defined with respect to several aspects of zone characteristic information, and in such a way that a criteria could be satisfied in different ways.

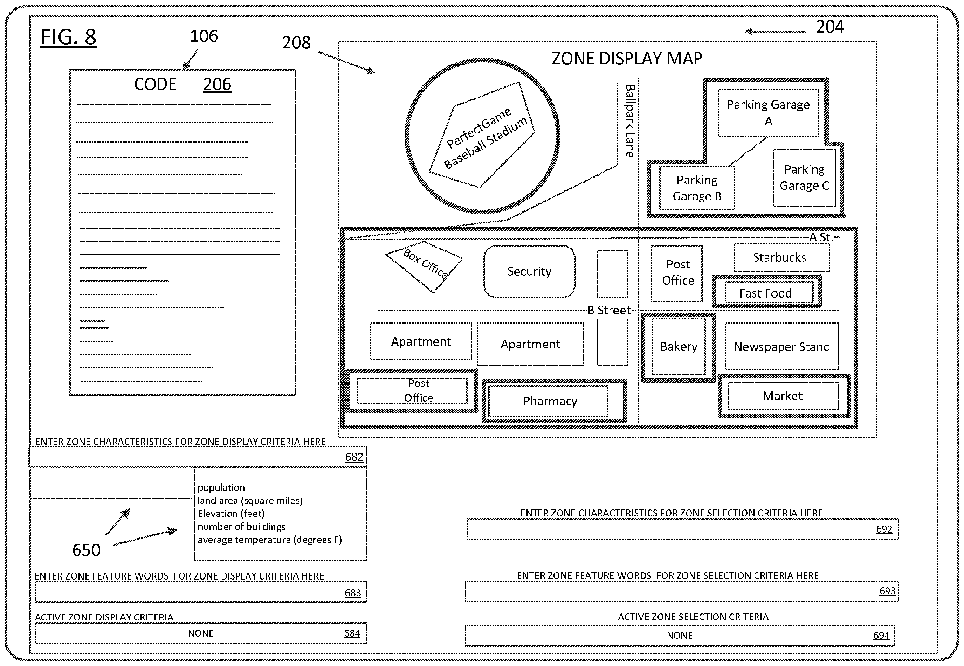

FIG. 8 depicts that the SDK interface 106 and zone display criteria window may be designed to prompt a developer to use logical operators in formatting zone display criteria based on zone characteristic information. As depicted, a developer has clicked on - or selected - the input window 682. The SDK interface 106 may be designed so that, in such a situation, the interface presents a prompt 650 to inform the developer of the zone characteristic information 123 variables stored in data library 120. For example, when the SDK 101 has access to a data library 120 which is formatted using the methodology depicted in FIG. 4, the prompt 650 may provide the following listed variables: population, land area, elevation, number of buildings, average temperature. Other combinations of variables may also be used, depending on the zone characteristic information 124 which data library 120 stores. The prompt 650 may also inform the developer of logical operators which the SDK 101 recognizes. In this way, the developer may be able to quickly and intelligently generate zone display criteria inputs which the SDK 101 recognizes.

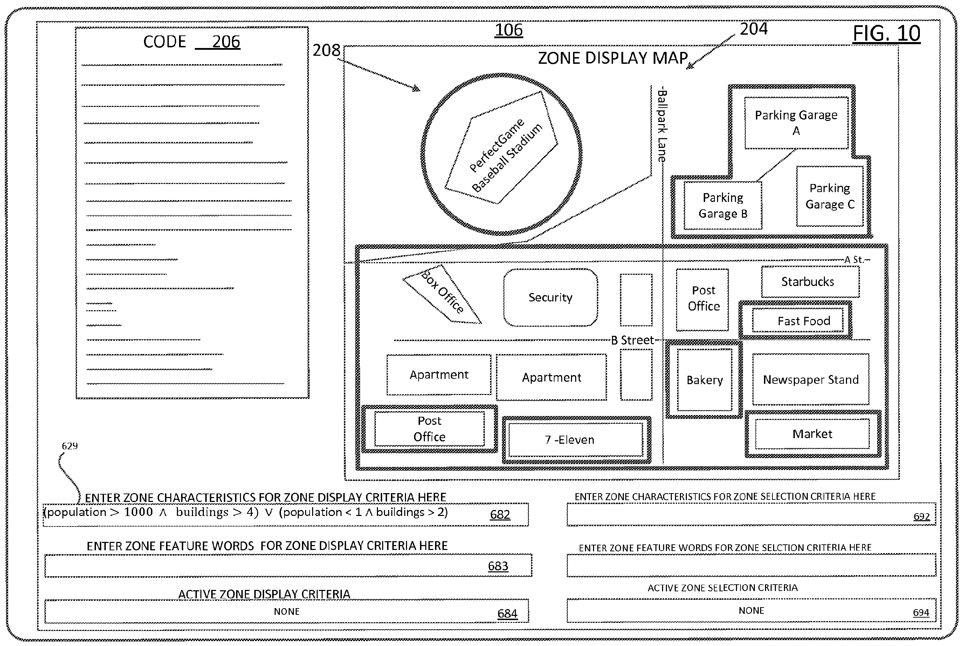

FIG. 10 depicts one example of how a complex logical display filtering criteria can be formatted and inputted in the case of an SDK 101 with access to a data library 120 which stores zone size (i.e. geographic area), population, precipitation and average temperature information within sets of zone characteristic information 123. When such zone characteristics are stored in data library 120, the SDK 101 may be designed to process a zone display criteria input defined to cause the display of only zones having both a population in excess of a specified number residents and a size less than a specified square-mileage, in addition to any remaining zones having more than a specified number of buildings and less than a specified population. An example zone display criteria formatted in this way is depicted at 629, before being inputted at window 682.

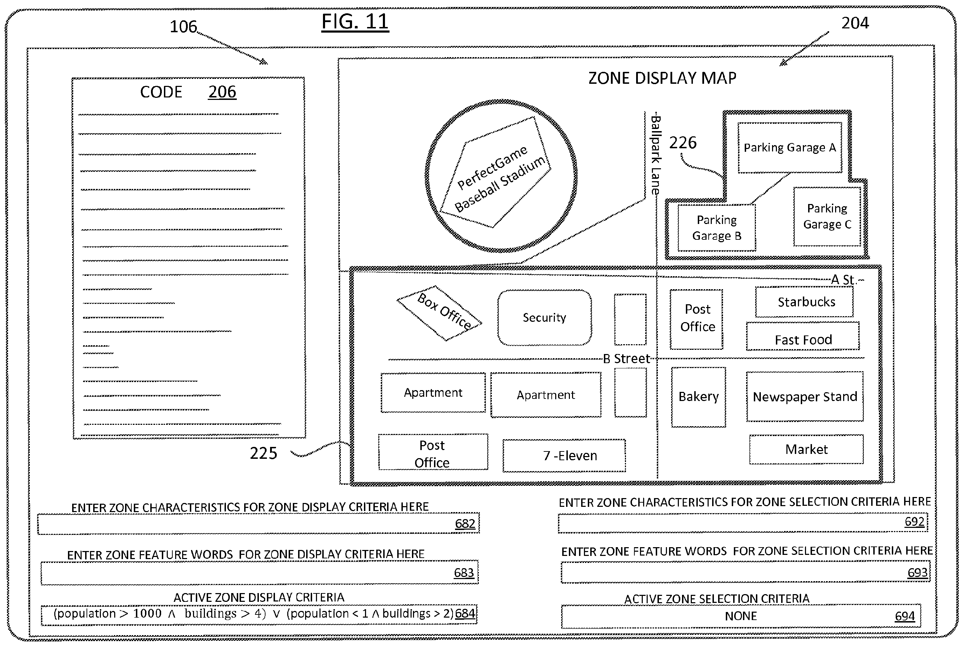

FIG. 11 depicts how zone display criteria 629, when inputted at window 682, declutters zone display map 204. In FIG. 11, zone display criteria 629 is active, as shown in window 684. Criteria 629 causes several zone delineations to be removed from zone display map 204. As depicted, zones 225 and 226 are the only zones which satisfy criteria 629. Thus, these zones continue to be depicted on zone display map 204.

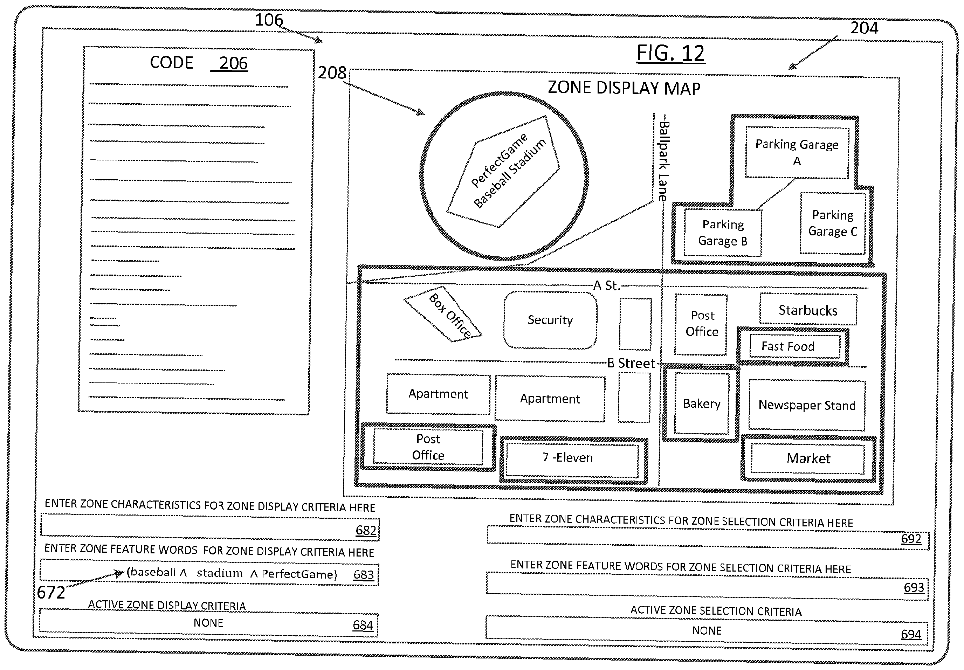

Additionally or alternatively, the SDK 101 may be designed to control the depiction of zones in response to zone display criteria defined with respect to zone feature words. The use of zone feature words in this manner is depicted in FIG. 12. As depicted in FIG. 12, the SDK interface 106 may include an input window 683 through which a developer can define a criteria with respect to a zone feature word or combination of zone feature words. When a developer specifies a criteria by inputting a word or word combination, the zone display map 204 is altered so as to remove depictions of any zones corresponding to a set of zone feature words not having the word or word combination therein.

The SDK 101 may be designed so that any zone feature word display criteria inputted at 683 is used in conjunction with zone characteristic display criteria inputted at 682. In this case, when a developer inputs criteria into window 682 and 683, the SDK 101 alters the zone display map so as to depict only the zones which correspond to both a set of zone characteristic information which satisfies the criteria inputted at 682, and a set of zone feature words which satisfy the criteria at 683.

When an SDK 101 enables zone display criteria to be based on zone feature words, the SDK may also be enable developers to use of logical operators to specify complex display criteria based on zone feature words. When logical operators are recognized by the SDK 101 for specifying complex zone display criteria based on feature words, the operators may be used similarly to the manner described previously with respect to zone display criteria based on zone characteristic information. At 672, FIG. 12 shows a complex display criteria based on zone feature words, just before being inputted into window 683.

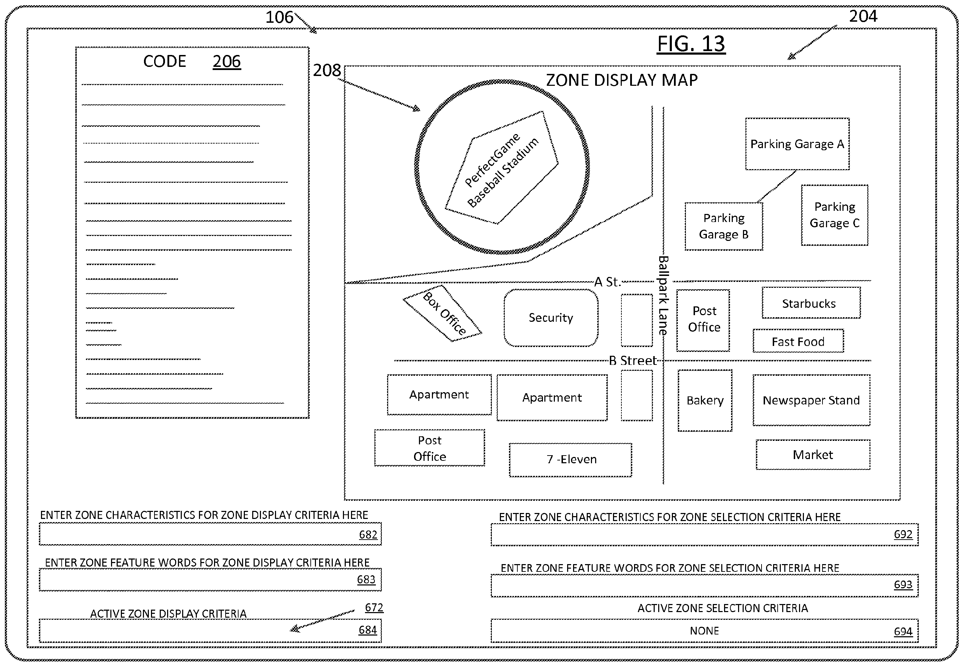

FIG. 13 shows how the feature word criteria 672, once inputted, declutters zone map display 204. Zone display criteria 672 is depicted as an active zone display criteria 684. As a result of the feature words specified in the criteria 672, the zone display map 204 displays only zone 208, i.e. the zone defined with respect to PerfectGame Baseball Stadium. The appearance of zone display map 204 in FIG. 13 is meant to imply that, insofar as the urban area depicted on display map 204 is concerned, zone 208 is the only zone delineated in data library 120 that corresponds to a set of feature words in which the criteria feature words "baseball", "stadium" and "PerfectGame" appears.

As an alternative to displaying zones using a map display overlay, the SDK interface may visually depict zones in other ways as well. For instance, delineated zones may be depicted at SDK interface 106 through reference to zone identifiers 121 or delineation data 122.

Regardless of the display feature used to depict zones for developer viewing, the SDK 101 may provide selection features to enable a developer to rapidly and easily select zones. Selection features may be designed so that when a developer selects a zone, zone delineation information corresponding to the selected zone is integrated into the application code being developed. When the application code is later executed by a mobile device processor, a geofence is activated with respect to the zone selected during development of the application.

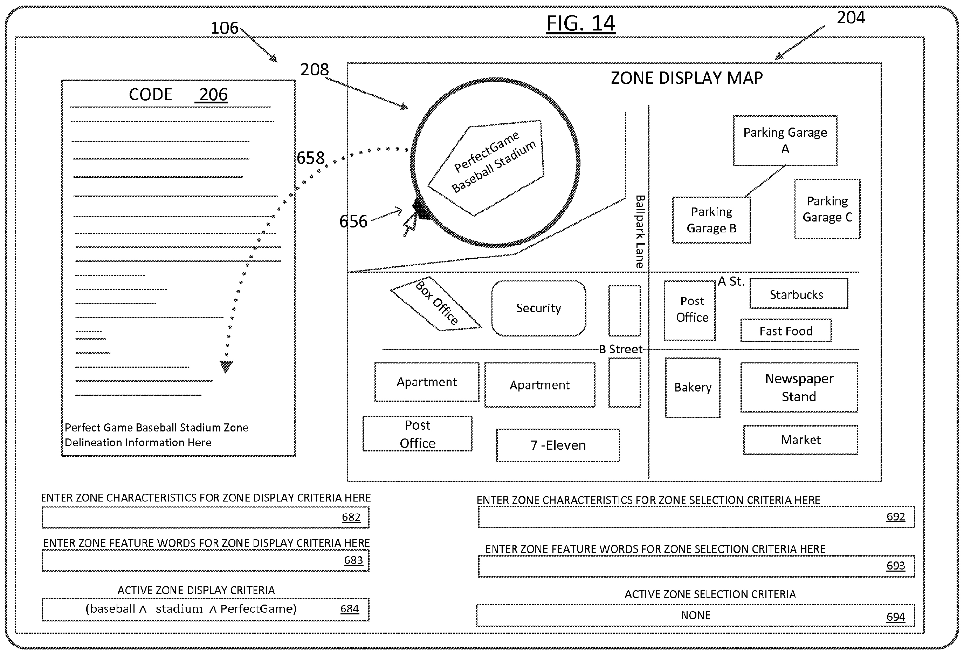

FIG. 14 depicts a first methodology for implementing a zone selection feature. A selection feature may incorporate selectable icons, tags, or other interactive selection elements responsive to at least one type of developer zone selection inputs, such as a mouse click or double-click, highlighting action, "drag and drop", or keyboard entry. An example of this type of selection feature is depicted by the tab depicted at 656. SDK interface 106 may be designed so that, in response to a developer clicking on the tab 656, the zone delineation information depicted at 208 is incorporated into a geofence module created within code 206. The incorporation of this information into code 206 is represented by the arrow 658 which shown for explanatory purposes only, and should not be understood as being presented at the SDK interface 106. The zone display map 204 may be designed such that any time a map depicts a delineated zone, the depiction includes one or more such selection elements, each of which can be activated by a developer to incorporate corresponding zone delineation information into code.

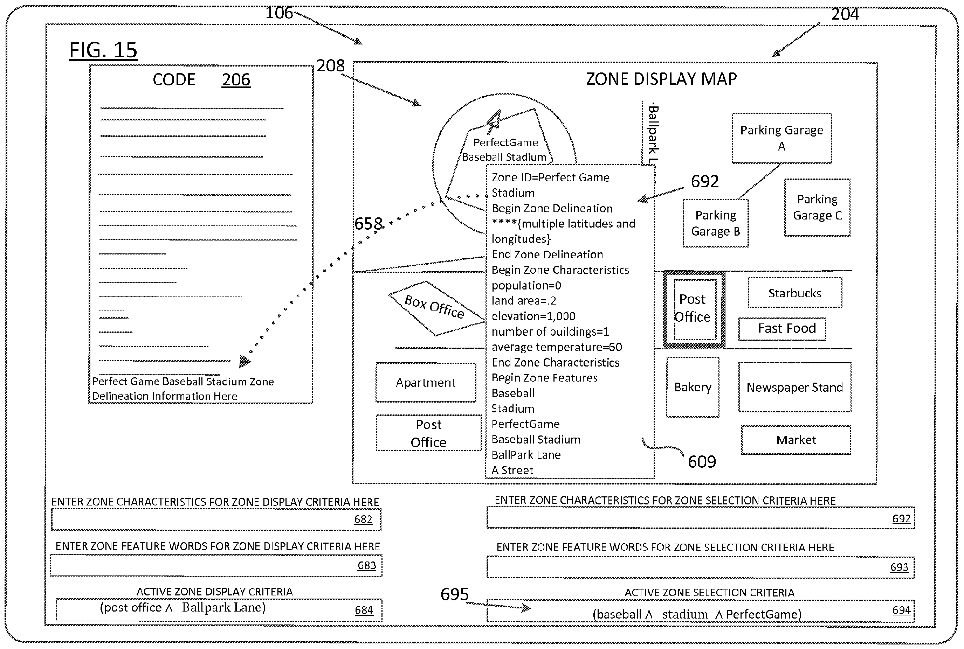

FIG. 15 also depicts that the SDK visual interface 106 can be designed with additional or alternative zone selection features. One such zone selection feature may be designed such that, rather than creating geofences by using tags 256 to manually designate zones depicted on the zone display map 204, a developer may optionally create geofences with respect to zones by simply inputting a zone selection criteria. Much like the zone display criteria options described with regards to FIG. 6-13, a zone selection criteria may be defined with respect to zone feature words, zone characteristic information, or both such types of information. When a zone selection criteria is inputted, the SDK evaluates information in data library 120 and retrieves the delineation information 122 corresponding to zones which satisfy the criteria. The SDK 101 creates a separate geofence with respect to each such retrieved set of delineation information.

As may be understood by reference to windows 692 and 693 in FIG. 15, a mechanism for processing selection criteria inputs can be implemented in a manner similar to display control features 682 and 683. A developer may use window 692 to input zone selection criteria defined with respect to zone characteristic information. Additionally or alternatively, the developer may use window 693 to input zone selection criteria defined with respect to any number of zone feature words. Within either window, or both windows, a developer may create complex search criteria by using logical operators.

FIG. 15 depicts an SDK interface 106 feature which allows a developer to retrieve and review zone identifiers, zone delineation information, zone characteristic information, and zone feature word information from data library 120. This information retrieval feature may enable a developer to retrieve such information on a zone-by-zone basis - for example by placing a mouse cursor over a zone depicted on zone display map 204. As implied in FIG. 15, a developer has placed a mouse cursor over zone 208. Zone 208, as depicted in earlier figures, is defined with respect to PerfectGame Baseball Stadium. However, zone 208 is not specifically delineated on zone display map 204, because it corresponds to a set of zone feature information which does not satisfy the active zone display criteria in window 684. Nonetheless, in response to the developer's mouse input, the SDK 101 retrieves, from data library 120, the zone information 609 that is stored with respect to zone 208. The SDK interface 106 displays this retrieved information over zone display map 204.

As depicted in active zone selection criteria window 694, the developer has just created a geofence with respect to zone 208, which is delineated with respect to PerfectGame Baseball Stadium. To create this geofence, the developer has used window 693 to input a complex zone selection criteria 695 based on the zone feature words "baseball", "PerfectGame" and "stadium". In response, the SDK 101 used the zone selection criteria to query the zone information corresponding to each zone delineated in data library 120. Because the zone depicted at 208 and referenced by zone ID "PerfectGame Stadium" corresponds to a set of zone feature words which satisfies the zone selection criteria, the set of zone delineation information depicted at 692 is retrieved. The retrieved delineation information is incorporated into code 206, thereby causing a geofence to be created with respect to zone 208 around PerfectGame Baseball Stadium. The incorporation of the zone delineation into code 206 is depicted by the arrow 658.

A zone selection feature such as the one depicted at 692 and 693 enables a developer to select zones independently of zone display map 204. That is, zones need not be depicted on the display map 204 to be selected. Moreover, if numerous zones are delineated in library 120, and particular zone feature words are common to many delineated zones in the library, a developer may effectively retrieve and incorporate into code 206 the zone delineation information of many zones. What's more, even when many zones are to be selected, the zone selection process may be completed in barely the time than it takes for the developer to specify a zone selection criteria at window 692 and/or 693.

An additional feature (not depicted) may enable a developer to generate mobile application code which includes several geofence modules referencing both several sets of zone delineation information, as well as corresponding zone location fixing information. Additionally, the SDK interface 106 may be designed to enable the developer to write code for causing a mobile device 162 to use the zone delineation information, in conjunction with the location fixing information, so as to activate geofence in a manner based on the location fixing capabilities (e.g. base station triangulation, methods based on RTT or RSSI, GPS, etc.) in the delineated zones. By using this feature, the developer may create a mobile application such that, upon its execution, the client mobile device 162 activates geofences in an order which is related to the location fixing capabilities of the various zones. For example, the developer could design code to cause the mobile device, when executing the application software, to first activate geofences with respect to zones having many sources of location fixing information. Moreover, the code could be designed to cause mobile devices to activate geofences with respect to zones having fewer sources of information only when the devices are not near any other zones offering more sources of information.

A hypothetical application development scenario will now be discussed. The scenario will explain the usage, by a developer, of an SDK interface having the features explained in the description of SDK interface 106. This hypothetical example involves a mobile application developer using SDK interface 106 to create a mobile application for the purpose of assisting coffee customers in San Diego, California. The developer is designing the application so that when a client mobile device is located in San Diego, execution of the application software will cause the mobile device to determine the location and name of the five closest coffee shops nearest to the device. Also, execution of the application will cause the device to detect when it has been brought into a coffee shop, and use the world-wide web to search for coupons and drink recommendation whenever such a detection occurs.

For this reason, the developer uses SDK interface 106 to assemble code that will command each mobile device processor to periodically access data depicting the device geodetic location. The developer further intends the code to cause each client mobile device to use each updated instance of location data to make a series proximity calculations. At each device, the proximity calculations will involve comparing each location to the locations of coffee shops in San Diego, for the purpose of both determining nearest coffee shops and detecting when a location is within a coffee shop. In this regard, the developer may wish to design application code so that each client mobile device will activate a series of geofences, each of which will be defined with respect to a different one of the coffee shop locations in San Diego. Thus, the developer might wish to incorporate zone delineation information into the application code, so that the code will include precise references to each San Diego coffee shop location.

Using an SDK interface of the kind known in the art prior to this disclosure, the developer could create zone delineation information and incorporate the information into code by using commonly-encountered visual programming features. These conventional programming features enable a developer to visually scan a map and perform zone-by-zone incorporation of delineation information into code through the use of a mouse to manually draw lines around locations which interest the developer. Naturally, for a developer seeking to select zone delineation information for each of the numerous coffee shops in San Diego, the prior art interface would be burdensome. The developer would have to scan a map of San Diego to determine coffee shop locations, and draw lines to delineate a zone at each location.

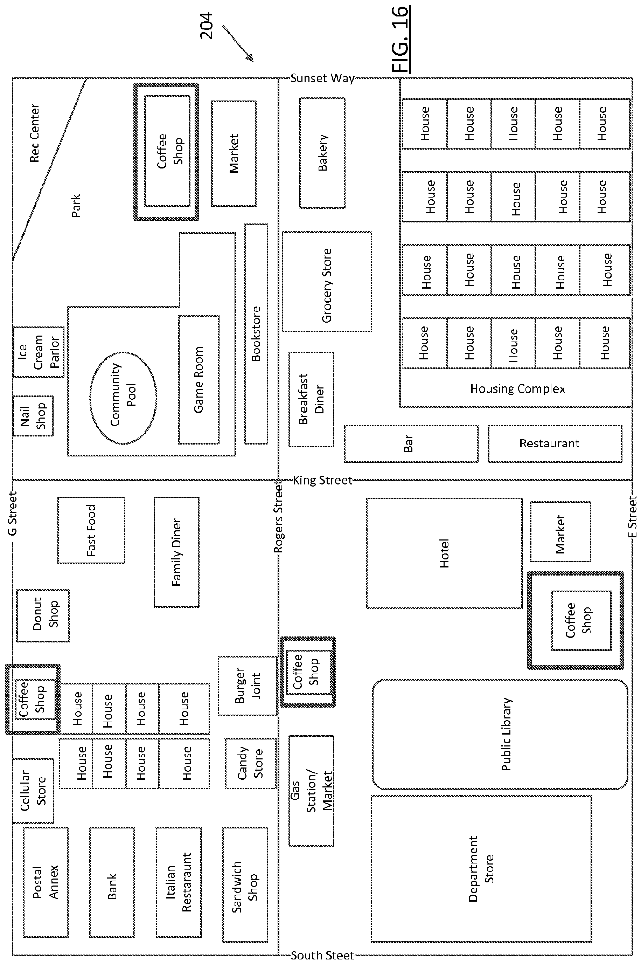

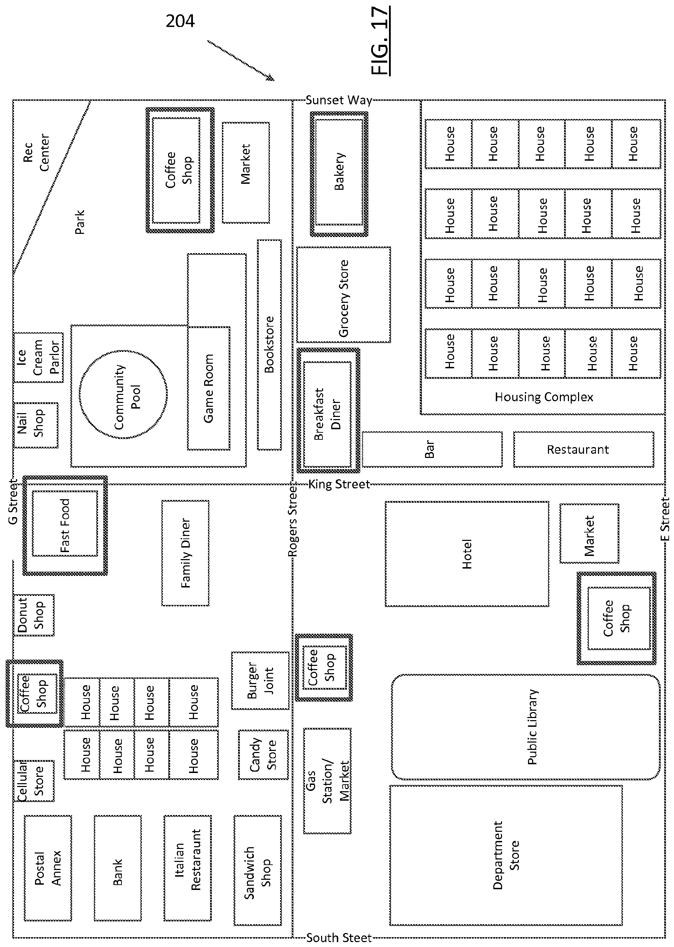

As compared to using an SDK interface known in the prior art, the hypothetical developer could more easily select coffee shop zone delineation information using an SDK interface 106 having the capabilities that have been described herein. One example process that the hypothetical developer might use to select coffee shop zone delineation information is described by reference to FIGS. 16 and 17. FIG. 16 is a focused view of the zone display map 204 of SDK interface 106. The zone display map 104 has been manipulated by the developer so as to focus on a San Diego neighborhood (each depiction of a San Diego neighborhood is hypothetical, and is not based on actual streets or buildings in San Diego).

FIG. 16 shows how the zone display map 204 might appear after the developer inputs a zone display criteria in window 682. In fact, FIG. is meant to depict how the zone display map 204 might look when controlled by an active zone display criteria based exclusively on the zone feature word "coffee shop" (not shown). SDK interface 106 enables the developer to use simple display criteria based on feature words such as "coffee shop" to identify and evaluate zones delineated with respect to land use, commercial and activity areas which are likely to be of importance in light of the developer's application design and intentions.

Each zone which satisfies the zone display criteria is depicted by a shape overlaid on the zone display map 204. In this way, the developer can quickly retrieve and see the location all delineated zones, located within the scope of zone display map 204, which correspond to a set of zone feature information containing the feature word "coffee shop". By reference to zone display map 204 The developer can also verify that these zones do actually geographically coincide with the locations of coffee shops, and click on any or all overlaid zone depictions to incorporate the underlying zone delineation information into code.

FIG. 17 illustrates a hypothetical zone map display 204 outcome when a developer uses the zone selection window 683 of SDK interface 106 to specify a zone display criteria which is more complex than the criteria mentioned with regards to FIG. 16 By using a more complex zone display criteria, the developer can retrieve additional zone delineation information for zones defined with respect to other coffee-related businesses which, despite not being coffee shops, may nonetheless be of interest to the developer. For example, the zone delineations depicted on the zone display map 204 in FIG. 17 may be outputted in response to a display criteria such as:
("coffee" V "tatte" V "cappuccino" V "coffee slop" V "cafe")
As shown in FIG. 17 the zone display map 204 now displays several additional overlaid shapes which were not depicted in FIG. 4A. These shapes show a zone delineated with respect to a bakery, breakfast diner, and a fast food restaurant.

Previously, this disclosure mentioned that, in addition to storing a zone data library 120 at the developer terminal or server 192, a copy of the data library 120 could be stored at client mobile devices, such as device 162. In this case, the SDK interface 106 may be designed and operated exactly as described thus far. However, the SDK interface may also offer different developer options.

For example, zone selection input windows may operate such that zone selection criteria are not used to retrieve zone delineation data from data library 120. Thus, zone delineation information is not incorporated into code 206. Rather, the zone selection window simply enables the developer to specify and incorporate zone selection criteria (based on zone feature words, zone characteristic informations, or both) in code 206.

In this case, upon software execution at a mobile device 162, a mobile device processor 163 may use the zone selection criteria to retrieve zone delineation from data library 120, and use the retrieved delineation information to create and activate geofences, in accordance with supplemental instructions within the software. When mobile application software is generated using an SDK operated under this type of arrangement, the amount of transmitted data associated with downloading the mobile application software may be greatly reduced because these transmissions need not include any zone delineation data. In fact, such an arrangement may obviate the need for a data library to be stored at a developer's computer terminal 204 or server 192. However, when the SDK 106 is operated at a developer terminal which does not have direct access to data library 120, certain interface features, such as zone display map 120, may be impractical.

Additionally, the mobile device 162 may executed code 206 that commands activation and deactivation of geofences based on changes in the position of the mobile device. In this case, the code specifies zone delineation information with respect to which the mobile device 162 activates geofences. The specified zone delineation information may include a threshold boundary beyond the zone. The mobile device 162 periodically determines its position, and activates a geofence with respect to each delineated zone for which the position is within the threshold boundary. When a geofence has been activated with respect to a zone, but a subsequent mobile device 162 position is determined to be outside of the threshold boundary, the mobile device 162 deactivates the geofence.

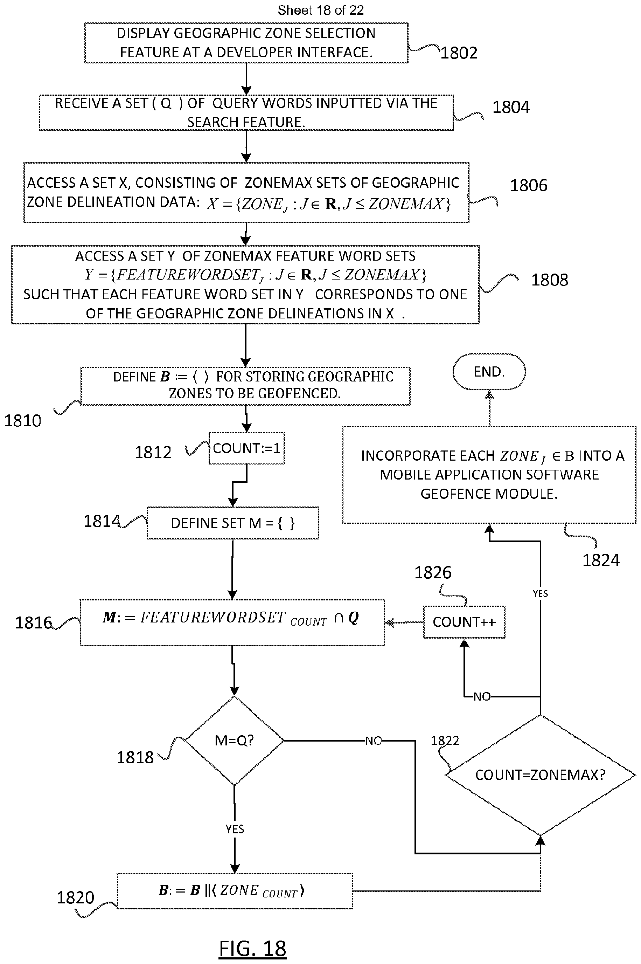

FIG. 18 is an example algorithm which may be encoded within SDK implementation software 102, and executed by a processor at a developer computer terminal 204 in which the SDK is used. FIG. 18, as depicted, may be used by the SDK to retrieve sets of zone delineation 122 information with respect to any number of zones, and create geofences with respect to each set of retrieved delineation information. For example, the algorithm may be employed when developer inputs a zone selection criteria based on a combination of zone feature words.

As depicted, at 1802 a zone selection feature is displayed at the developer interface. The zone selection feature may be an input window, such as the window depicted at 693. At 1804, the SDK 101 receives a set of ***Q*** specified zone feature words, as part of a developer's zone selection criteria. At 1806, the SDK 101 accesses a set (***X***). The set **X** consists of *ZONEMAX* sets of zone delineation data stored in data library 120. *ZONEMAX* is a variable used to represent the number of zones delineated in data library 120.

At 1808, the SDK accesses a set ***Y*.** Set ***Y*** consists of the various feature word sets 124 which correspond to one of the ZONEMAX zones delineated in data library 120. Next, at 1810, the SDK initializes an empty list ***B***. List ***B*** is initialized for the purpose of storing any zones which are later determined to satisfy the zone selection criteria mentioned with regards to 1802. Additionally, at 1812, a counting variable (COUNT) is initialized to 1.

At 1812, an empty set ***M*** is initialized. Subsequently, at 1814, set ***M*** is set equal to the intersection of set ***Q*** and *UREWORDSET_{COUNT}.* At 1816, ***M*** is compared to ***Q**.* If ***M*** is equal to ***Q**,* then *ZONE_{CONT}* is appended to list **B,** at 1818. At 1822, if *COUNT*=*ZONEMAX*,then each *ZONE_{J}* in list ***B*** is incorporated into mobile application software which is later transmitted to a mobile device (normally, via a server) and causes activation of geofence at the mobile device. Alternatively, if COUNT is not equal to *ZONEMAX* at 1822, *COUNT* is incremented at 1826, iterations of steps 1816-1822 are performed until *COUNT=ZONEMAX.* When *COUNT=ZONEMAX,* step 1824 is executed, as described previously.

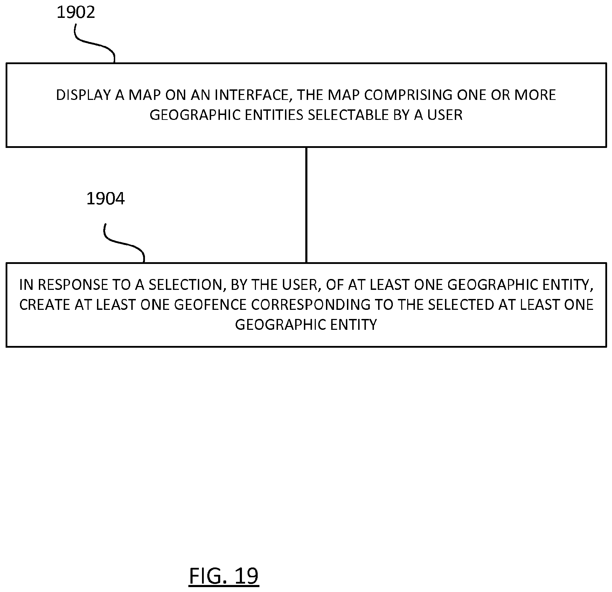

FIG. 19 depicts example operations in accordance with this disclosure. At 1902, a map is displaced, the map comprises one or more geographic entities selectable by a user. At 1904, in response to a selection, by the user, of at least one geographic entity of the one or more geographic entities, at least one geofence corresponding to the selected at least one geographic entity is created.

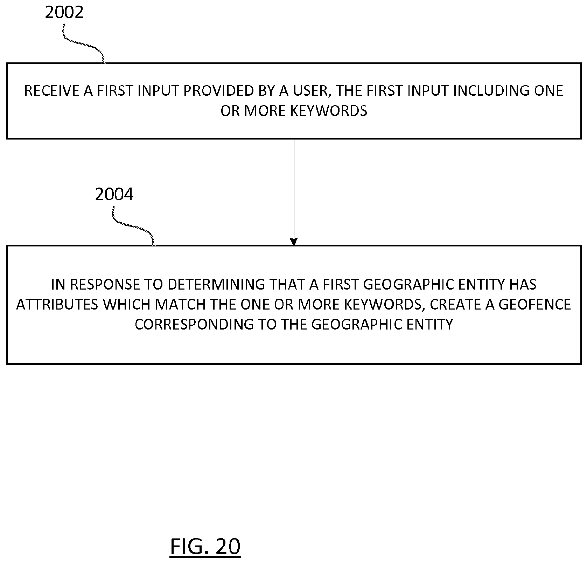

FIG. 20 depicts example operations in accordance with this disclosure. At 2002, an SDK 101, mobile device 162 or other computing apparatus receives a first input provided by a user, the first input including one or more keywords. At 2004, in response to determining that a first geographic entity has attributes that match the one or more keywords, the SDK, mobile device or other apparatus, as the case may be, creates a geofence corresponding to the first geographic entity.

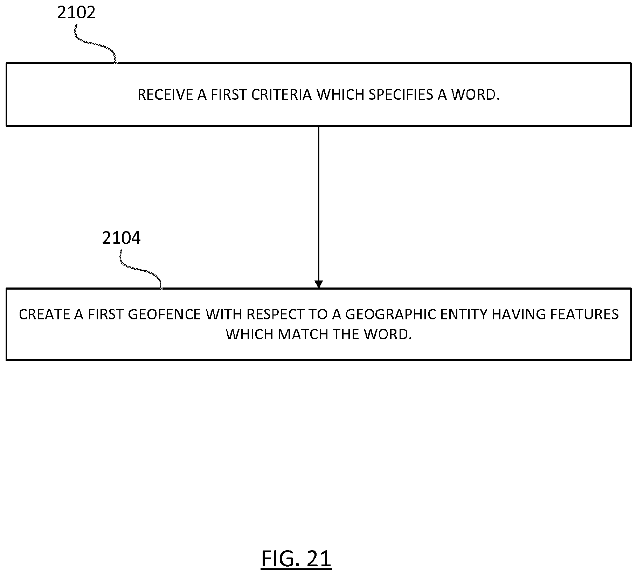

FIG. 21 depicts example operations in accordance with this disclosure. At 2102, an SDK 101, mobile device 162 or other processing apparatus, as the case may be, receives a first criteria which specifies a word. At 2104, the SDK 101, mobile 162 device or other apparatus, as the case may be, creates a first geofence with respect to a geographic entity having features which match the word.

### ASSEMBLY OF A LARGE DATA LIBRARY USING MACHINE-LEARNING TECHNIQUES

Data library 120 may be assembled using a computer algorithm designed to process large amounts of data from maps, atlases, periodicals, governmental or commercial databases, census reports, land surveys or any other source of digitized information. The algorithm may be designed to determine land areas for which zones should be delineated, and to delineate these zones by generating zone depiction information to be stored in data library 120. The algorithm may be also be designed to enable the learning of features, attributes, characteristics, etc. of each delineated zone, and storing this information in sets of zone characteristic information or zone feature information created with respect to these zones.

Such an algorithm may be designed to determine a land area for zone delineation based on map information, and features displayed on a map. As one specific example of such a process, an algorithm may include specific steps for determining the location and dimensions of parks, nature areas, and other outdoor attractions, and delineating a zone with respect to each such area. These steps may include computerized map scanning in search of areas depicted with a green color and labeled with a name which includes one or more words such as "park", "forest", "reserve", "gardens", "nature area,", etc. When such a depiction is detected on a map, a relevant park area is determined to be located at the depicted area. Based on some relevance criteria, such as the size of the depicted area, for example, a determination can made that a zone should be delineated with respect to depicted park areas which satisfy the relevance criteria. A next algorithmic step could then involve computerized analysis of the map to determine the location of the outer edges of each such relevant area.

At this point, the analysis could involve, amongst other things, computerized scanning for color changes (e.g. a green on white color transition) to detect the depicted edges of each relevant area. When depicted edges of an area are detected, a next step could involve computing a series of many closely spaced geodetic points which geographically coincide with the detected edges. These geodetic points, which may be depicted using latitudinal and longitudinal coordinates, may then be used as the zone delineation data for a zone defined with respect to the relevant area depiction found on the map.

A similar series of steps may be intelligently used to both detect and determine the locations and boundaries of any relevant area, regardless of area characteristics, usage, or recognition. It is specifically worth mentioning that many sources of digitized maps offer vast amounts of detailed and highly granular map data and depictions. For example, present day, web-based cartographic services such as Goggle Maps and Google Earth provide highly detailed maps which precisely depict political boundaries, land use, land ownership divisions, and urban planning allocations. For example, Google Earth accurately depicts the areas occupied by corporate offices, parks, hospitals, malls, parking lots and other such establishments. As one example, Google Maps frequently displays the precise land area occupied by shopping malls, and further delineates how shopping mall floor area is divided amongst the commercial establishments which occupy mall space.

Thus, cartographic services such as Goggle Maps provide a wealth of data that can be mined using algorithms for identifying land areas around which an application developer might wish to implement a geofence, and for obtaining information about these areas.

Once a zone is delineated with respect to an area determined to be relevant, a next algorithmic step may involve performing computations to determine basic size, shape and dimensional attributes of the zone. For example, the size of a zone may be computed using any number of commonly know mathematical techniques for computing the area circumscribed by a collection of geodetic points. An average elevation, highest elevation or lowest elevation of a zone may be obtained by executing a software module designed to use zone delineation data to extract elevation information from any digitized topographical chart or topographical tables in which elevations are indexed to geodesic coordinates. An average rainfall, temperature, wind or other weather characteristics of a zone may similarly be obtained through the execution of a module designed to obtain information from digitized weather charts, tables or atlases.

Subsequently, other zone characteristics or features or attributes may be determined through reference to zip codes, street addresses or political information relevant to the zone. Such information may also be obtained through computerized scanning of maps and map data indicated by the HTML code used to provide online mapping services. In this regard, it is important to recognize that several web-based mapping services not only delineate individual business locations, but also commercial establishment names, addresses and phone number when available. This information is frequently also accompanied by client reviews which contain information about the establishment. This vast information is communicated through HTML code accessible through the worldwide web. Thus, when an area of interest is identified for zone delineation zone feature words may be ascertained by analyzing sufficient amounts of this additional information.

Specific details are given in the description to provide a thorough understanding of the embodiments. However, embodiments may be practiced without these specific details. For example, well-known circuits, processes, algorithms, structures, and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing embodiments of the invention. Various changes may be made in the function and arrangement of elements without departing from the scope of the invention as defined in the appended claims.

Also, some embodiments were described as processes depicted as flow diagrams or block diagrams. Although each may describe the operations as a sequential process, many of the operations can be performed in parallel or concurrently. In addition, the order of the operations may be rearranged. A process may have additional steps not included in the figure. Furthermore, embodiments of the methods may be implemented by hardware, software, firmware, middleware, microcode, hardware description languages, or any combination thereof. When implemented in software, firmware, middleware, or microcode, the program code or code segments to perform the associated tasks may be stored in a computer-readable medium such as a storage medium. Processors may perform the associated tasks.

Having described several embodiments, various modifications, alternative constructions, and equivalents may be used without departing from the scope as defined in the appended claims. For example, the above elements may merely be a component of a larger system, wherein other rules may take precedence over or otherwise modify the application of the invention. Also, a number of steps may be undertaken before, during, or after the above elements are considered. Accordingly, the above description does not limit the scope of the disclosure.

## Claims

1. A method of provisioning geofences, the method implemented at a computing device (104) and comprising:
displaying (1902) a map (204) comprising one or more geographic entities, each of the one or more geographic entities selectable by a user and associated with prestored zone delineation information (122) defining the boundaries of the geographic entity; and
receiving, in response to the displaying, a selection by the user, of one or more selected geographic entities of the one or more geographic entities;
creating (1904) at least one geofence in response to the selection, wherein creating the at least one geofence includes identifying the prestored zone delineation information associated with each of the one or more selected geographic entities, such that the at least one geofence includes boundaries defined by the prestored zone delineation information (122).

2. The method of claim 1, wherein displaying (1902) the map (204) further comprises:
displaying multiple geographic entities selectable by the user; and
displaying a recommendation for the user to select a first one of the multiple geographic entities.

3. The method of claim 1, further comprising:
providing an interface (106) that enables the user to select one or more geographic entities by inputting one or more keywords;
receiving a keyword inputted by the user; and
in response to determining that a second geographic entity is associated with an attribute that matches the inputted keyword, creating a geofence corresponding to the second geographic entity.

4. The method of claim 1, further comprising:
providing an interface (106) that enables the user to alter the map (204) by inputting one or more keywords;
receiving a keyword inputted by the user; and
in response to determining that attributes of a third geographic entity of the multiple geographic entities do not match the inputted keyword, ceasing to display the third geographic entity.

5. The method of claim 2, wherein displaying the recommendation comprises:
depicting the first one of the multiple geographic entities using a first depiction methodology comprising at least one of: highlighting the first one of the multiple geographic entities, showing an emboldened outline of the first one of the multiple geographic entities, or combinations thereof.

6. The method of claim 5, wherein:
depicting the first one of the multiple geographic entities using the first depiction methodology is performed in response to determining that the first one of the multiple geographic entities satisfies a recommendation criteria.

7. The method of claim 6, wherein determining that the first one of the multiple geographic entities satisfies the recommendation criteria is based on a number of previous selections of the first one of the multiple geographic entities or is based on information indicating mobile device localization resources available near the first one of the multiple geographic entities.

8. The method of claim 1, wherein creating (1904) the at least one geofence includes generating code that references the prestored zone delineation information.

9. A method of provisioning geofences, the method implemented at a computing device (104) and comprising:
storing prestored zone-delineation information (122) associated with each of one or more geographic entities, the prestored zone delineation information (122) defining the boundaries of the geographic entity;
receiving (2002) a first input provided by a user, the first input including one or more keywords; and
determining that a first geographic entity of the one or more geographic entities has attributes that match the one or more keywords;
creating (2004) a geofence corresponding to the first geographic entity, wherein the creating the geofence includes identifying the prestored zone delineation information (220) associated with the geographic entity, such that the geofence includes boundaries defined by the prestored zone delineation information (220).

10. The method of claim 9, further comprising:
receiving a logical expression inputted by the user, the logical expression including multiple keywords and at least one logical operator;
identifying additional geographic entities having attributes that match the multiple keywords in a manner that satisfies the logical expression; and
in response to identifying the additional geographic entities, creating geofences corresponding to the additional geographic entities.

11. The method of claim 10, further comprising:
receiving an input from the user, the input including multiple keywords;
comparing:
a first quantity of attribute-keyword matches between attributes of a second geographic entity and the multiple keywords; and
a second quantity of attribute-keyword matches between attributes of a third geographic entity and the multiple keywords; and
in response to determining that the first quantity is greater than the second quantity, creating a second geofence corresponding to the second geographic entity.

12. The method of claim 11, further comprising:
prioritizing the second geographic entity over the third geographic entity based on a result of the comparison;
defining a first set of sources of localization information and a second set of sources of localization information based on the second geographic entity being prioritized over the third geographic entity;
determining a first position of the mobile device (162) relative to the second geographic entity, wherein determining the first position includes using the sources of the first set; and
determining a second position of the mobile device (162) relative to the third geographic entity, wherein determining the second position includes using the sources of the second set.

13. The method of claim 9, wherein creating (1904) a geofence corresponding to the first geographic entity is performed in response to determining that a mobile device (162) is at a first location, the method further comprising:
subsequent to creating the geofence corresponding to the first geographic entity, determining that the mobile device (162) is at a second location;
in response to determining that the mobile device (162) is at the second location, creating a geofence corresponding to a second geographic entity;
determining a distance separating the second location and the first location;
determining that the distance exceeds a distance threshold; and
in response to determining that the distance exceeds the distance threshold, deactivating the geofence corresponding to the first geographic entity.

14. An apparatus configured to provision geofences, the apparatus comprising:
a memory (100); and
a processor (103) coupled to the memory and configured to carry out the steps of any of claims 1 to 8.

15. An apparatus for provisioning geofences, the apparatus comprising:
a memory (100) configured to store the prestored zone-delineation information as mentioned in claim 9; and
a processor (103) coupled to the memory and configured to carry out the steps of any of claims 9 to 13.

## Patentansprüche

1. Ein Verfahren zum Vorsehen von Geofences, wobei das Verfahren an einer Rechnereinrichtung (104) implementiert ist und Folgendes aufweist:
Anzeigen (1902) einer Karte (204), die eine oder mehrere geographische Einheiten aufweist, wobei jede der ein oder mehreren geographischen Einheiten durch einen Nutzer auswählbar ist und mit einer vorgespeicherten Zonenbegrenzungsinformation (122) assoziiert ist, die die Grenzen der geographischen Einheit definiert; und
Empfangen, ansprechend auf das Anzeigen, einer Auswahl durch den Nutzer von einer oder von mehreren ausgewählten geographischen Einheiten der ein oder mehreren geographischen Einheiten;
Erzeugen (1904) wenigstens eines Geofence ansprechend auf die Auswahl, wobei das Erzeugen des wenigstens einen Geofence Identifizieren der vorgespeicherten Zonenbegrenzungsinformation aufweist, die mit jeder der ein oder mehreren ausgewählten geographischen Einheiten assoziiert ist, so dass der wenigstens eine Geofence Grenzen beinhaltet, die durch die vorgespeicherte Zonenbegrenzungsinformation (122) definiert werden.

2. Verfahren nach Anspruch 1, wobei das Anzeigen (1902) der Karte (204) weiter Folgendes aufweist:
Anzeigen von mehreren geographischen Einheiten, die durch den Nutzer ausgewählt werden können; und
Anzeigen einer Empfehlung für den Nutzer zum Auswählen einer ersten der mehreren geographischen Einheiten.

3. Verfahren nach Anspruch 1, das weiter Folgendes aufweist:
Vorsehen einer Schnittstelle (106), die es dem Nutzer ermöglicht, eine oder mehrere geographische Einheiten auszuwählen durch Eingeben eines oder mehrerer Stichwörter;
Empfangen eines Schlag- bzw. Stichwortes, das durch den Nutzer eingegeben worden ist; und
ansprechend auf Bestimmen das eine zweite geographische Einheit mit einem Attribut assoziiert ist, das mit dem eingegebenen Stichwort übereinstimmt, Erzeugen eines Geofence, der der zweiten geographischen Einheit entspricht.

4. Verfahren nach Anspruch 1, das weiter Folgendes aufweist:
Vorsehen einer Schnittstelle (106), die es dem Nutzer ermöglicht, die Karte (204) durch Eingeben von einem oder mehreren Stichwörtern zu ändern;
Empfangen eines Stichwortes, das durch den Nutzer eingegeben worden ist; und
ansprechend auf Bestimmen, dass Attribute einer dritten geographischen Einheit der mehreren geographischen Einheiten nicht mit dem eingegebenen Stichwort übereinstimmen, Beenden der Anzeige der dritten geographischen Einheit.

5. Verfahren nach Anspruch 2, wobei das Anzeigen der Empfehlung Folgendes aufweist:
Darstellen der ersten der mehreren geographischen Einheiten unter Verwendung einer ersten Darstellungsmethodik, die wenigstens eines von Folgendem aufweist: Hervorheben der ersten der mehreren geographischen Einheiten, Zeigen eines fett dargestellten Umrisses der ersten der mehreren geographischen Einheiten oder Kombinationen davon.

6. Verfahren nach Anspruch 5, wobei:
das Darstellen der ersten der mehreren geographischen Einheiten unter Verwendung der ersten Darstellungsmethodik ansprechend auf Bestimmen durchgeführt wird, dass die erste der mehreren geographischen Einheiten ein Empfehlungskriterium erfüllt.

7. Verfahren nach Anspruch 6, wobei das Bestimmen, dass die erste der mehreren geographischen Einheiten das Empfehlungskriterium erfüllt auf einer Anzahl von vorherigen Auswahlen der ersten der mehreren geographischen Einheiten basiert oder auf Information basiert, die Mobileinrichtungslokalisierungsressourcen anzeigt, die in der Nähe der ersten der mehreren geographischen Einheiten verfügbar sind.

8. Verfahren nach Anspruch 1, wobei das Erzeugen (1904) des wenigstens einen Geofence Generieren von Code beinhaltet, der auf die vorgespeicherte Zonenbegrenzungsinformation Bezug nimmt.

9. Ein Verfahren zum Vorsehen von Geofences, wobei das Verfahren an einer Rechnereinrichtung (104) implementiert ist und Folgendes aufweist:
Speichern von vorgespeicherter Zonenbegrenzungsinformation (122), die mit jeder der ein oder mehreren geographischen Einheiten assoziiert ist, wobei die vorgespeicherte Zonenbegrenzungsinformation (122) die Grenzen der geographischen Einheit definiert;
Empfangen (2002) einer ersten Eingabe, die durch einen Nutzer vorgesehen wird, wobei die erste Eingabe ein oder mehrere Stichworte enthält; und
Bestimmen, dass eine erste geographische Einheit der ein oder mehreren geographischen Einheiten Attribute hat, die mit den ein oder mehreren Stichwörtern übereinstimmen;
Erzeugen (2004) eines Geofence, der der ersten geographischen Einheit entspricht, wobei das Erzeugen des Geofence Identifizieren der vorgespeicherten Zonenbegrenzungsinformation (220) beinhaltet, die mit der geographischen Einheit assoziiert ist, so dass der Geofence Grenzen beinhaltet, die durch die vorgespeicherte Zonenbegrenzungsinformation (220) definiert sind.

10. Verfahren nach Anspruch 9, das weiter Folgendes aufweist:
Empfangen eines logischen Ausdruckes, der durch den Nutzer eingegeben worden ist, wobei der logische Ausdruck mehrere Stichwörter und wenigstens einen logischen Operanden beinhaltet;
Identifizieren zusätzlicher geographischer Einheiten mit Attributen, die mit den mehreren Stichwörtern auf eine Weise übereinstimmen, die den logischen Ausdruck erfüllen; und
ansprechend auf das Identifizieren der geographischen Einheiten, Erzeugen von Geofences, die den zusätzlichen geographischen Einheiten entsprechen.

11. Verfahren nach Anspruch 10, das weiter Folgendes aufweist:
Empfangen einer Eingabe von dem Nutzer, wobei die Eingabe mehrere Stichwörter enthält;
Vergleichen:
einer ersten Anzahl von Attribut-Stichwort-Übereinstimmungen zwischen Attributen einer zweiten geographischen Einheit und den mehreren Stichwörtern; und
einer zweiten Anzahl von Attribut-Stichwort-Übereinstimmungen zwischen Attributen einer dritten geographischen Einheit und den mehreren Stichwörtern; und
ansprechend auf Bestimmen, dass die erste Anzahl größer als die zweite Anzahl ist, Erzeugen eines zweiten Geofence, der der zweiten geographischen Einheit entspricht.

12. Verfahren nach Anspruch 11, das weiter Folgendes aufweist:
Priorisieren der zweiten geographischen Einheit gegenüber der dritten geographischen Einheit basierend auf einem Ergebnis des Vergleichs;
Definieren eines ersten Satzes von Quellen von Lokalisierungsinformation und eines zweiten Satzes von Quellen von Lokalisierungsinformation basierend darauf, dass die zweite geographische Einheit gegenüber der dritten geographischen Einheit priorisiert wird;
Bestimmen einer ersten Position der Mobileinrichtung (162) relativ zu der zweiten geographischen Einheit, wobei das Bestimmen der ersten Position Verwenden der Quellen des ersten Satzes beinhaltet; und
Bestimmen einer zweiten Position der Mobileinrichtung (162)d relativ zu dritten geographischen Einheit, wobei das Bestimmen der zweiten Position Verwenden der Quellen des zweiten Satzes beinhaltet.

13. Verfahren nach Anspruch 9, wobei das Erzeugen (1904) eines Geofence, der er ersten geographischen Einheit entspricht, ansprechend auf Bestimmen durchgeführt wird, dass eine Mobileinrichtung (162) an einem ersten Standort ist, wobei das Verfahren weiter Folgendes aufweist:
nachfolgend auf Erzeugen des Geofence, der der ersten geographischen Einheit entspricht, Bestimmen, dass die Mobileinrichtung (162) an einem zweiten Standort ist;
ansprechend auf Bestimmen, dass die Mobileinrichtung (162) an dem zweiten Standort ist, Erzeugen eines Geofence, der der zweiten geographischen Einheit entspricht;
Bestimmen einer Distanz, die den zweiten Standort und den ersten Standorttrennt;
Bestimmen, dass die Distanz einen Distanzschwellenwert überschreitet; und
ansprechend auf Bestimmen, dass die Distanz den Distanzschwellenwert überschreitet, Deaktivieren des Geofence, der der ersten geographischen Einheit entspricht.

14. Eine Vorrichtung, die konfiguriert ist zum Vorsehen von Geofences, wobei die Vorrichtung Folgendes aufweist:
einen Speicher (100); und
einen Prozessor (103), der an einen Speicher gekoppelt ist und konfiguriert ist zum Durchführen der Schritte nach einem der Ansprüche 1 bis 8.

15. Eine Vorrichtung zum Vorsehen von Geofences, wobei die Vorrichtung Folgendes aufweist:
einen Speicher (100), der konfiguriert ist zum Speichern der vorgespeicherten Zonenbegrenzungsinformation nach Anspruch 9; und
einen Prozessor (103), der an einen Speicher gekoppelt ist und konfiguriert bis zum Durchführen der Schritte nach einem der Ansprüche 9 bis 13.

## Revendications

1. Procédé pour fournir des géo-repères, le procédé étant mis en oeuvre au niveau d'un dispositif informatique (104) et comprenant :
afficher (1902) une carte (204) comprenant une ou plusieurs entités géographiques, chacune desdites une ou plusieurs entités géographiques étant sélectionnable par un utilisateur et associée à des informations de délimitation de zone préenregistrées (122) définissant les frontières de l'entité géographique ; et
recevoir, en réponse à l'affichage, une sélection par l'utilisateur d'une ou plusieurs entités géographiques sélectionnées parmi lesdites une ou plusieurs entités géographiques ;
créer (1904) au moins un géo-repère en réponse à la sélection, la création dudit au moins un géo-repère comprenant l'identification des informations de délimitation de zone préenregistrées associées à chacune desdites une ou plusieurs entités géographiques sélectionnées, de sorte que ledit au moins un géo-repère comprend des frontières définies par les informations de délimitation de zone préenregistrées (122).

2. Procédé selon la revendication 1, dans lequel affichage (1902) de la carte (204) comprend en outre :
afficher de multiples entités géographiques sélectionnables par l'utilisateur ; et
afficher une recommandation pour que l'utilisateur sélectionne une première des multiples entités géographiques.

3. Procédé selon la revendication 1, comprenant en outre :
prévoir une interface (106) qui permet à l'utilisateur de sélectionner une ou plusieurs entités géographiques en introduisant un ou plusieurs mots clés ;
recevoir un mot clé introduit par l'utilisateur ; et
en réponse à une détermination qu'une deuxième entité géographique est associée à un attribut qui concorde avec le mot clé introduit, créer un géo-repère correspondant à la deuxième entité géographique.

4. Procédé selon la revendication 1, comprenant en outre :
prévoir une interface (106) qui permet à l'utilisateur d'altérer la carte (204) en introduisant un ou plusieurs mots clés ;
recevoir un mot clé introduit par l'utilisateur ; et
en réponse à une détermination que des attributs d'une troisième entité géographique des multiples entités géographiques ne concordent pas avec le mot clé introduit, arrêter d'afficher la troisième entité géographique.

5. Procédé selon la revendication 2, dans lequel l'affichage de la recommandation comprend :
décrire la première des multiples entités géographiques en utilisant une première méthodologie de description comprenant au moins l'une des actions suivantes :mettre en surbrillance la première des multiples entités géographiques, présenter un contour en gras de la première des multiples entités géographiques, ou une de leurs combinaisons.

6. Procédé selon la revendication 5, dans lequel :
ladescription de la première des multiples entités géographiques en utilisant la première méthodologie de description est réalisée en réponse à une détermination que la première des multiples entités géographiques satisfait un critère de recommandation.

7. Procédé selon la revendication 6, dans lequel la détermination que la première des multiples entités géographiques satisfait le critère de recommandation est basée sur un nombre de sélections précédentes de la première des multiples entités géographiques ou est basée sur des informations indiquant des ressources de localisation de dispositif mobile disponibles à proximité de la première des multiples entités géographiques.

8. Procédé selon la revendication 1, dans lequel la création (1904) dudit au moins un géo-repère inclut la génération de code qui référence les informations de délimitation de zone préenregistrées.

9. Procédépour fournir des géo-repères, le procédé étant mis en oeuvre au niveau d'un dispositif informatique (104) et comprenant :
mémoriser des informations de délimitation de zone préenregistrées (122) associée à chacune d'une ou plusieurs entités géographiques, les informations de délimitation de zone préenregistrées (122) définissant les frontières de l'entité géographique ;
recevoir (2002) une première entrée fournie par un utilisateur, la première entrée comprenant un ou plusieurs mots clés ; et
déterminer qu'une première entité géographique desdites une ou plusieurs entités géographiques a des attributs qui concordent avec lesdits un ou plusieurs mots clés ;
créer (2004) un géo-repère correspondant à la première entité géographique, la création du géo-repère comprenant l'identification d'informations de délimitation de zone préenregistrées (220) associées à l'entité géographique, de sorte que le géo-repère comprend des frontières définies par les informations de délimitation de zone préenregistrées (220).

10. Procédé selon la revendication 9, comprenant en outre :
recevoir une expression logique introduite par l'utilisateur, l'expression logique comprenant de multiplesmots clés et au moins un opérateur logique ;
identifier des entités géographiques additionnelles ayant des attributs qui concordent avec les multiples mots clés d'une manière qui satisfait l'expression logique ; et
en réponse à l'identification des entités géographiques additionnelles, créer des géo-repères correspondant aux entités géographiques additionnelles.

11. Procédé selon la revendication 10, comprenant en outre :
recevoir une entrée d'un utilisateur, l'entrée comprenant de multiples mots clés ;
comparer :
une première quantité de concordances attribut-mot clé entre des attributs d'une deuxième entité géographique et les multiples mots clés ; et
une deuxième quantité de concordances attribut-mot clé entre des attributs d'une troisième entité géographique et les multiples mots clés ; et
en réponse à une détermination que la première quantité est supérieure à la deuxième quantité, créer un deuxième géo-repère correspondant à la deuxième entité géographique.

12. Procédé selon la revendication 11, comprenant en outre :
donner à la deuxième entité géographique une priorité supérieure à celle de la troisième entité géographique sur la base d'un résultat de la comparaison ;
définir un premier ensemble de sources d'informations de localisation et un deuxième ensemble de sources d'informations de localisation sur la base du fait que la deuxième entité géographique a une priorité supérieure à celle de la troisième entité géographique ;
déterminer une première position du dispositif mobile (162) par rapport à la deuxième entité géographique, la détermination de la première position comprenant l'utilisation des sources du premier ensemble ; et
déterminer une deuxième position du dispositif mobile (162) par rapport à la troisième entité géographique, la détermination de la deuxième position comprenant l'utilisation des sources du deuxième ensemble.

13. Procédé selon la revendication 9, dans lequel la création (1904) d'un géo-repère correspondant à la première entité géographique est réalisée en réponse à une détermination qu'un dispositif mobile (162) est à un premier emplacement, le procédé comprenant en outre :
à la suite de la création du géo-repère correspondant à la première entité géographique, déterminer que le dispositif mobile (162) est à un deuxième emplacement ;
en réponse à une détermination que le dispositif mobile (162) est au deuxième emplacement, créer un géo-repère correspondant à une deuxième entité géographique ;
déterminer une distance séparant le deuxième emplacement et le premier emplacement ;
déterminer que la distance dépasse un seuil de distance ; et
en réponse à une détermination que la distance dépasse le seuil de distance, désactiver le géo-repère correspondant à la première entité géographique.

14. Dispositif agencé pour fournir des géo-repères, le dispositif comprenant :
une mémoire (100) ; et
un processeur (103) couplé à la mémoire et agencé pour exécuter les étapes de l'une quelconque des revendications 1 à 8.

15. Dispositif pour fournir des géo-repères, le dispositif comprenant :
une mémoire (100) agencée pour mémoriser les informations de délimitation de zone préenregistrées comme cela est mentionné en revendication 9 ; et
un processeur (103) couplé à la mémoire et agencé pour exécuter les étapes de l'une quelconque des revendications 9 à 13.
